(19) Europäisches Patentamt / European Patent Office / Office européen des brevets

(11) **EP 3 379 621 A1**

(12) **EUROPEAN PATENT APPLICATION**

(43) Date of publication:
26.09.2018 Bulletin 2018/39

(51) Int Cl.:
*H01M 4/485* (2010.01)   *H01M 10/0525* (2010.01)
*H01M 10/056* (2010.01)   *H01M 10/0562* (2010.01)

(21) Application number: 17190552.4

(22) Date of filing: 12.09.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 24.03.2017   JP 2017058376
08.09.2017   JP 2017172757

(71) Applicant: **KABUSHIKI KAISHA TOSHIBA**
**Minato-ku**
**Tokyo**
**105-8001 (JP)**

(72) Inventors:
• **Iwasaki, Takuya**
**Tokyo, 105-8001 (JP)**
• **Sugizaki, Tomoko**
**Tokyo, 105-8001 (JP)**
• **Harada, Yasuhiro**
**Tokyo, 105-8001 (JP)**
• **Takami, Norio**
**Tokyo, 105-8001 (JP)**

(74) Representative: **Hoffmann Eitle**
**Patent- und Rechtsanwälte PartmbB**
**Arabellastraße 30**
**81925 München (DE)**

(54) **ELECTRODE GROUP, SECONDARY BATTERY, BATTERY PACK AND VEHICLE**

(57) According to one approach, an electrode group (1) is provided. The electrode group (1) includes a positive electrode (5), a negative electrode (3), and a solid electrolyte layer (4) provided between the positive electrode (5) and the negative electrode (3) and including a first portion (4-1) including first solid electrolyte particles (4A-1) in contact with the positive electrode (5), a second portion (4-2) including second solid electrolyte particles (4A-2) in contact with the negative electrode (3), and a third portion (4-3) provided between the first and second portions (4-1, 4-2) and including third solid electrolyte particles (4A-3). As for the average particle size, that of the third solid electrolyte particles (4A-3) is larger than that of the first solid electrolyte particles (4A-1) and that of the second solid electrolyte particles (4A-2).

F I G. 2

EP 3 379 621 A1

**Description**

FIELD

The present discloser relates to an electrode group, a secondary battery, a battery module, a battery pack and a vehicle.

BACKGROUND

Secondary batteries are widely used as high energy density batteries in a variety of fields such as electric vehicles, electric power storage, and information instruments. Accordingly, market demands on secondary batteries are further growing, and active studies are being made.

Among them, secondary batteries as a power source for electric vehicles are demanded to have a high energy density, or a high discharge capacity per unit weight or unit volume. On the other hand, in a secondary battery, for example, in a nonaqueous electrolyte battery, with the increase of the discharge capacity per unit weight or unit volume, the demand for safety also increases. One of the resolutions for the demand is an all-solid-state secondary battery. The all-solid-state secondary battery is a secondary battery which uses a solid electrolyte instead of a electrolyte solution.

In particularly, since organic electrolyte solutions are ignitable, techniques for improving safety of a battery including an organic electrolyte solution are actively developed. However, it is still difficult to secure sufficient safety.

On the other hand, all solid secondary batteries include no liquid organic electrolyte, and thus carry an extremely low risk of ignition, and can exhibit extremely high safety.

Furthermore, all-solid-state secondary batteries include no liquid electrolyte, which allows a bipolar battery to be suitably fabricated. The bipolar battery include, for example, electrodes each having a bipolar structure and a solid electrolyte provided between the electrodes. The electrode having a bipolar structure may include, for example, a current collector having a first surface and an opposing second surface, a positive electrode active material-containing layer provided on the first surface of the current collector, and a negative electrode active material-containing layer provided on the second surface of the current corrector. Such an electrode can be obtained, for example, by the following procedure. First, a positive electrode coating material is coated onto the first surface of the current collector. Then, the obtained coated film is dried to obtain a positive electrode active material-containing layer. On the other hand, a negative electrode coating material is coated onto the second surface of the current collector. Then, the obtained coated film is dried to obtain a negative electrode active material-containing layer. Thus, an electrode having a bipolar structure can be obtained. A bipolar battery can be manufactured, for example, by the following procedure. First, plural electrodes each having a bipolar structure are fabricated. In some of these electrodes, a solid electrolyte coating material is coated onto the positive electrode active material-containing layer and/or the negative electrode active material-containing layer. The coated film is dried to obtain a solid electrolyte layer. Then, these electrodes are stacked such that the positive electrode active material-containing layer and the negative electrode active material-containing layer face each other with the solid electrolyte layer sandwiched therebetween. Thus, a bipolar battery can be suitably formed. In such a bipolar battery, voltage inside a battery can be increased by increasing the number of stacks.

BRIEF DESCRIPTION OF THE DRAWINGS

FIG. 1 is a schematic cross-sectional view of an electrode group of a first example according to a first approach.

FIG. 2 is an enlarged cross-sectional view of an A portion of the electrode group shown in FIG. 1;

FIG. 3 is an enlarged cross-sectional view of a B portion of the electrode group shown in FIG. 1;

FIG. 4 is a schematic cross-sectional view of an electrode group of a second example according to the first approach;

FIG. 5 is a schematic cross-sectional view of a secondary battery of a first example according to a second approach;

FIG. 6 is a partially cutaway perspective view schematically showing a secondary battery of a second example according to the second approach;

FIG. 7 is an enlarged cross-sectional view of a C portion of the secondary battery shown in FIG. 6;

FIG. 8 is a perspective view schematically showing one example of a battery module according to a third approach;

FIG. 9 is an exploded perspective view schematically showing one example of a battery pack according to a fourth approach;

FIG. 10 is a block diagram showing an electric circuit of the battery pack in FIG. 9;

FIG. 11 is a schematic sectional view showing one example of a vehicle according to a fifth approach; and

FIG. 12 is schematic view showing another example of a vehicle according to the fifth approach.

DETAILED DESCRIPTION

In general, according to one approach, an electrode group is provided. The electrode group includes a positive electrode, a negative electrode, and a solid electrolyte layer. The solid electrolyte layer is provided between the positive electrode and the negative electrode. The solid electrolyte layer includes a first portion including first solid electrolyte particles in contact with the positive electrode, a second portion including second solid electrolyte particles in contact with the negative electrode, and a third portion provided between the first and second portions and including third solid electrolyte particles. An average particle size of the third solid electrolyte particles is larger than an average particle size of the first solid electrolyte particles, and larger than an average particle size of the second solid electrolyte particles.

According to an approach, a secondary battery is provided. The secondary battery includes the electrode group according to the approach.

According to an approach, a battery module is provided. The battery module includes secondary batteries each according to the approach.

According to an approach, a battery pack is provided. The battery pack includes a secondary battery according to the approach.

According to an approach, a vehicle is provided. The vehicle includes the battery pack according to the approach.

According to the approach, there can be provided an electrode group that can realize a secondary battery capable of exhibiting an excellent output performance.

The approaches will be explained below with reference to the drawings. In this case, the structures common to all approaches are represented by the same symbols and duplicated explanations will be omitted. Also, each drawing is a typical view for explaining the approaches and for promoting an understanding of the approaches. Though there are parts different from an actual device in shape, dimension and ratio, these structural designs may be properly changed taking the following explanations and known technologies into consideration.

(First Approach)

According to one approach, an electrode group is provided. The electrode group includes a positive electrode, a negative electrode, and a solid electrolyte layer. The solid electrolyte layer is provided between the positive electrode and the negative electrode. The solid electrolyte layer includes a first portion including first solid electrolyte particles in contact with the positive electrode, a second portion including second solid electrolyte particles in contact with the negative electrode, and a third portion provided between the first and second portions and including third solid electrolyte particles. An average particle size of the third solid electrolyte particles is larger than an average particle size of the first solid electrolyte particles, and larger than an average particle size of the second solid electrolyte particles.

When a solid electrolyte is used in a secondary battery, it is important to find how to prevent reduction in lithium ion conductivity between the positive electrode and the negative electrode. Solid electrolytes capable of exhibiting lithium ion conductivity equivalent to that of the liquid nonaqueous electrolyte have been discovered as single-particles. However, it has been found that when such solid electrolyte particles are actually arranged and stacked between the positive electrode and the negative electrode, loss occurs in the delivery of lithium ions at interfaces among the solid electrolyte particles, so that the lithium ion conductivity is reduced in the whole solid electrolyte layer.

As a result of intensive studies to solve this problem, the present inventors have realized the electrode group according to the first approach.

The electrode group according to the first approach includes a solid electrolyte layer provided between a positive electrode and a negative electrode. The solid electrolyte layer includes a first portion, a second portion, and a third portion. The first portion includes solid electrolyte particles which are first solid electrolyte particles in contact with the positive electrode. The second portion includes solid electrolyte particles which are second solid electrolyte particles in contact with the negative electrode. The third portion is provided between the first portion and the second portion. Also, the third portion includes solid electrolyte particles which are third solid electrolyte particles.

In such a solid electrolyte layer, the average particle size of the solid electrolyte particles (the third solid electrolyte particles) in the third portion is larger than the average particle size of the solid electrolyte particles (the first solid electrolyte particles) in the first portion, and larger than the average particle size of the solid electrolyte particles (the second solid electrolyte particles) in the second portion. That is, in the solid electrolyte layer, while it is possible to reduce the average particle size of the solid electrolyte particles in contact with the positive electrode or the negative electrode, it is possible to increase the average particle size of the solid electrolyte particles included in the third portion which is an intermediate portion.

The first portion of the solid electrolyte layer including the first solid electrolyte particles which can have a small average particle size can be in contact with the positive electrode at many contacts. Thus, the first portion of the solid electrolyte layer can promote the delivery of lithium ions to and from the positive electrode. Likewise, the second portion of the solid electrolyte layer including the second solid electrolyte particles which can have a small average particle size can be in contact with the negative electrode at many contacts. Thus, the second portion of the solid electrolyte layer can promote the delivery of lithium ions to and from the negative electrode.

On the other hand, in the third portion of the solid electrolyte layer including the third solid electrolyte particles which can have a large average particle size, the interfaces among the solid electrolyte particles can be reduced. Thus, in the third portion of the solid electrolyte layer, excellent lithium ion conductivity can be achieved.

As the results, the electrode group according to the first approach can realize a secondary battery capable of exhibiting an excellent output performance.

On the other hand, an electrode group in which the average particle size of the third solid electrolyte particles in the third portion of the solid electrolyte layer is equal to or less than the average particle size of the first solid electrolyte particles in the first portion of the solid electrolyte layer may be, for example, an electrode group in which the first solid electrolyte particles included in the first portion of the solid electrolyte layer are too large. In such an electrode group, the number of contacts between the positive electrode and the solid electrolyte particles is too small, so that lithium ions cannot be sufficiently delivered. Alternatively, an electrode group in which the average particle size of the third solid electrolyte particles is equal to or less than the average particle size of the first solid electrolyte particles may also be an electrode group in which the third solid electrolyte particles included in the third portion of the solid electrolyte layer are too small. In such an electrode group, loss occurs in the delivery of lithium ions at the interfaces among the solid electrolyte particles. For these reasons, the output performance that can be achieved by an electrode group in which the average particle size of the third solid electrolyte particles in the third portion of the solid electrolyte layer is equal to or less than the average particle size of the first solid electrolyte particles in the first portion of the solid electrolyte layer is inferior to that of the electrode group according to the first approach.

On the other hand, an electrode group in which the average particle size of the third solid electrolyte particles in the third portion of the solid electrolyte layer is equal to or less than the average particle size of the second solid electrolyte particles in the second portion of the solid electrolyte layer may be, for example, an electrode group in which the second solid electrolyte particles are too large. In such an electrode group, the number of contacts between the negative electrode and the solid electrolyte particles is too small, so that lithium ions cannot be sufficiently delivered. Alternatively, an electrode group in which the average particle size of the third solid electrolyte particles is equal to or less than the average particle size of the second solid electrolyte particles may also be an electrode group in which the third solid electrolyte particles included in the third portion of the solid electrolyte layer are too small. In such an electrode group, loss occurs in the delivery of lithium ions at the interfaces among the solid electrolyte particles. For these reasons, the output performance that can be achieved by an electrode group in which the average particle size of the third solid electrolyte particles in the third portion is equal to or less than the average particle size of the second solid electrolyte particles in the second portion of the solid electrolyte layer is inferior to that of the electrode group according to the first approach.

The third portion of the solid electrolyte layer is provided between the first portion and the second portion, and the first portion of the solid electrolyte layer includes the first solid electrolyte particles in contact with the positive electrode. Thus, it can be said that the first portion of the solid electrolyte layer is provided between the third portion of the solid electrolyte layer and the positive electrode. A contact area between the positive electrode and the solid electrolyte layer is small in an electrode group in which the third solid electrolyte particles having a relatively large particle size and included in the third portion of the solid electrolyte layer are in contact with the positive electrode, so that lithium ions cannot be sufficiently delivered between the positive electrode and the solid electrolyte layer. Since the first portion of the solid electrolyte layer can be provided between the third portion of the solid electrolyte layer and the positive electrode, it is possible to prevent contact of the third solid electrolyte particles included in the third portion of the solid electrolyte layer with the positive electrode. Likewise, it can be said that the second portion of the solid electrolyte layer is provided between the third portion of the solid electrolyte layer and the negative electrode. A contact area between the negative electrode and the solid electrolyte layer is small in an electrode group in which the third solid electrolyte particles having a relatively large particle size and included in the third portion of the solid electrolyte layer are in contact with the negative electrode, so that lithium ions cannot be sufficiently delivered between the negative electrode and the solid electrolyte layer. Since the second portion of the solid electrolyte layer can be provided between the third portion of the solid electrolyte layer and the negative electrode, it is possible to prevent contact of the third solid electrolyte particles included in the third portion of the solid electrolyte layer with the negative electrode. These are also factors that enable the electrode group according to the first approach to achieve an excellent output performance.

Hereinafter, the electrode group according to the first approach will be described in more detail. Should be noted that "Average Particle Size" described below is a volume average primary particle size when particles consist of primary particles, and is a volume average secondary particle size when particles consist of secondary particles. Further, when particles are a mixture of primary particles and secondary particles, "Average Particle Size" is a volume average particle size of a mixture without distinction between primary particles and secondary particles.

The electrode group according to the first approach includes a positive electrode, a negative electrode, and a solid electrolyte layer. The solid electrolyte layer is provided between the positive electrode and the negative electrode.

The positive electrode can include a positive electrode current collector and a positive electrode active material-containing layer. The positive electrode current collector can have, for example, a belt-like planar shape. The belt-shaped positive electrode current collector can have a first surface and an opposing second surface. The positive electrode active material-containing layer can be provided on one surface or both surfaces of the positive electrode current collector. The positive electrode active material-containing layer can include a positive electrode active material, and optionally a conductive agent and a binder. The positive electrode current collector can include a portion where the positive electrode active material-containing layer is not supported on any surface. This portion can be used as a positive electrode tab. Alternatively, the positive electrode may include a positive electrode tab (which may be a positive electrode terminal) which is not a portion of the positive electrode current collector and is electrically connected to the positive electrode current collector.

The negative electrode may include a negative electrode current collector and a negative electrode active material-containing layer. The negative electrode current collector can have, for example, a belt-like planar shape. The belt-shaped negative electrode current collector can have a first surface and an opposing second surface. The negative electrode active material-containing layer can be provided on one surface or both surfaces of the negative electrode current collector. The negative electrode active material-containing layer can include a negative electrode active material, and optionally a conductive agent and a binder. The negative electrode current collector may include a portion where the negative electrode active material-containing layer is not supported on any surface. This portion can be used as a negative electrode tab. Alternatively, the negative electrode may include a negative electrode tab (which may be a negative electrode terminal) which is not a portion of the negative electrode current collector and is electrically connected to the negative electrode current collector.

Alternatively, the electrode group according to the first approach may include an electrode having a bipolar electrode. The electrode having a bipolar structure may include a current collector having a first surface and an opposing second surface, a positive electrode active material-containing layer as a positive electrode, and a negative electrode active material-containing layer as a negative electrode. The positive electrode active material-containing layer may be provided on the first surface of the current collector. The negative electrode active material-containing layer may be provided on the second surface of the current collector. The current collector may include a portion where neither the negative electrode active material-containing layer nor the positive electrode active material-containing layer is supported on a surface. This portion can be used as a current collector tab. Alternatively, the electrode having a bipolar structure may include a current collector tab which is not a portion of the current collector and is electrically connected to the current collector.

The positive electrode active material which can be included in the positive electrode active material-containing layer may have, for example, a particle shape. The positive electrode active material particles may be primary particles or secondary particles each of which is an aggregate of primary particles. Alternatively, the positive electrode active material particles may be a mixture of primary particles and secondary particles. An average particle size $D_C$ of the positive electrode active material particles is preferably from 0.5 $\mu$m to 30 $\mu$m, and more preferably from 1 $\mu$m to 10 $\mu$m.

The negative electrode active material which can be contained in the negative electrode active material-containing layer may have, for example, a particle shape. The negative electrode active material particles may be primary particles or secondary particles each of which is an aggregate of primary particles. Alternatively, the negative electrode active material particles may be a mixture of primary particles and secondary particles. An average particle size $D_A$ of the negative electrode active material particles is preferably from 0.5 $\mu$m to 20 $\mu$m, and more preferably from 0.8 $\mu$m to 10 $\mu$m.

The solid electrolyte layer includes a first portion, a second portion, and a third portion. The first portion includes first solid electrolyte particles in contact with the positive electrode. The second portion includes second solid electrolyte particles in contact with the negative electrode. The third portion is provided between the first portion and the second portion. Also, the third portion includes third solid electrolyte particles.

In each of the first, second and third portions of the solid electrolyte layer, the solid electrolyte particles can exhibit, for example, a broad particle size distribution. In each of the first, second and third portions of the solid electrolyte layer, it is preferable that the solid electrolyte particles each satisfy 0.1 $\mu$m $\leq D_1 \leq$ 2.9 $\mu$m, 0.05 $\mu$m $\leq D_{1-10} \leq$ 2.7 $\mu$m, 0.8 $\mu$m $\leq D_{1-90} \leq$ 5.5 $\mu$m, 0.1 $\mu$m $\leq D_2 \leq$ 2.9 $\mu$m, 0.05 $\mu$m $\leq D_{2-10} \leq$ 2.7 $\mu$m, 0.8 $\mu$m $\leq D_{2-90} \leq$ 5.5 $\mu$m, 3 $\mu$m $\leq D_3 \leq$ 30 $\mu$m, 0.9 $\mu$m $\leq D_{3-10} \leq$ 19 $\mu$m, and 20 $\mu$m $\leq D_{3-90} \leq$ 100 $\mu$m. Here, $D_1$ is the average particle size of the first solid electrolyte particles in the first portion of the solid electrolyte layer, $D_2$ is the average particle size of the second solid electrolyte particles in the second portion of the solid electrolyte layer, and $D_3$ is the average particle size of the third solid electrolyte particles in the third portion of the solid electrolyte layer. $D_{1-10}$, $D_{2-10}$, and $D_{3-10}$ are the particle sizes at each of which a cumulative frequency from a small particle size side is 10% in a cumulative particle size curve of the solid electrolyte particles in each of the first to third portions of the solid electrolyte layer. $D_{1-90}$, $D_{2-90}$, and $D_{3-90}$ are the particle sizes at each of which the cumulative frequency from the small particle size side is 90% in the cumulative particle size curve of the solid electrolyte particles in each of the first to third portions of the solid electrolyte layer. The cumulative particle size curve of the solid electrolyte particles is obtained according to a laser diffraction scattering method. It is more preferable that the solid electrolyte particles each satisfy $0.3 \ \mu m \leq D_1 \leq 1 \ \mu m$, $0.05 \ \mu m \leq D_{1-10} \leq 1.0 \ \mu m$, $1.1 \ \mu m \leq D_{1-90} \leq 2 \ \mu m$, $0.5 \ \mu m \leq D_2 \leq 1.5 \ \mu m$, $0.1 \ \mu m \leq D_{2-10} \leq 1 \ \mu m$, $1.1 \ \mu m \leq D_{2-90} \leq 2 \ \mu m$, $3 \ \mu m \leq D_3 \leq 8 \ \mu m$, $2.1 \ \mu m \leq D_{3-10} \leq 5 \ \mu m$, and $6 \ \mu m \leq D_{3-90} \leq 30 \ \mu m$. The unit of each of the particle sizes $D_1$, $D_{1-10}$, $D_{1-90}$, $D_2$, $D_{2-10}$, $D_{2-90}$, $D_3$, $D_{3-10}$ and $D_{3-90}$ is [$\mu m$]. Here, $D_{1-10} < D_1 < D_{1-90}$, $D_{2-10} < D_2 < D_{2-90}$, and $D_{3-10} < D_3 < D_{3-90}$.

The solid electrolyte layer preferably satisfies $0.0016 \leq D_1/D_3 \leq 0.96$ and $0.0033 \leq D_2/D_3 \leq 0.96$. Here, among the electrode groups according to the approach, the electrode group in which the solid electrolyte layer satisfies the ratios $D_1/D_3$ and $D_2/D_3$ within the above range can exhibit a more excellent output performance. The solid electrolyte layer more preferably satisfies $0.037 \leq D_1/D_3 \leq 0.34$ and $0.62 \leq D_2/D_3 \leq 0.5$.

Also, it is preferable that the average particle size $D_C$ of the positive electrode active material particles is larger than the average particle size $D_1$ of the first solid electrolyte particles. In addition, it is preferable that a part of the positive electrode active material particles is in contact with the first solid electrolyte particles of the first portion of the solid electrolyte layer. In this preferred aspect, the delivery of lithium ions between the positive electrode and the solid electrolyte layer can be further promoted.

In the other aspect, the ratio $D_1/D_C$ may be from 0.0025 to 2 and preferably from 0.015 to 1.

Also, it is preferable that the average particle size $D_A$ of the negative electrode active material particles is larger than the average particle size $D_2$ of the second solid electrolyte particles. In addition, it is preferable that a part of the negative electrode active material particles is in contact with the second solid electrolyte particles of the second portion of the solid electrolyte layer. In this preferred approach, the delivery of lithium ions between the negative electrode and the solid electrolyte layer can be further promoted.

In the other aspect, the ratio $D_2/D_A$ may be from 0.006 to 2 and preferably from 0.03 to 1.5.

The solid electrolyte layer preferably satisfies $0.002 \leq T_1/T_3 \leq 0.99$ and $0.004 \leq T_2/T_3 \leq 0.7$. Here, $T_1$ is the thickness of the first portion, $T_2$ is the thickness of the second portion, and $T_3$ is the thickness of the third portion. The thickness of the first portion is the maximum diameter of the solid electrolyte particles in contact with the positive electrode. The thickness of the second portion is the maximum diameter of the solid electrolyte particles in contact with the negative electrode. The thickness of the third portion is a difference obtained by subtracting the thickness $T_1$ of the first portion and the thickness $T_2$ of the second portion from the thickness $T$ of the solid electrolyte layer. The thickness of the solid electrolyte layer is the thickness of the solid electrolyte layer in the direction in which the positive electrode and the negative electrode face each other. Among the electrode groups according to the first approach, the electrode group in which the solid electrolyte layer satisfies the ratio $T_1/T_3$ and the ratio $T_2/T_3$ of within the above ranges can further reduce the loss of the delivery of lithium ions at the interfaces among the solid electrolyte particles, so that it is possible to realize a more excellent output performance. In addition, since the loss of the delivery of lithium ions can be further reduced, an increase in internal resistance of the electrode group can be suppressed. Consequently, the electrode group according to this preferred aspect can exhibit a more excellent cycle life.

Each portion of the solid electrolyte layer may further include a binder for binding the solid electrolyte particles.

In the electrode group according to the first approach, the third portion, which is an intermediate portion of the solid electrolyte layer, includes solid electrolyte particles having a relatively large average particle size. The larger the average particle size of the particles, the smaller the specific surface area and the smaller the amount of the binder necessary for binding the particles each other. Thus, in the solid electrolyte layer of the electrode group according to the first approach, the amount of the binder included in the third portion can be set to be smaller than the amount of the binder included in each of the first portion and the second portion.

Binders can exhibit relatively high flexibility. In the electrode group in which the amount of the binder is relatively small in the third portion of the solid electrolyte layer, the solid electrolyte layer can exhibit an excellent rigidity.

For example, when an active material which may cause a volume change due to charging and/or discharging is included in the positive electrode and/or the negative electrode, stress caused by the volume change of the active material may occur during charging and/or discharging, in the solid electrolyte layer. When such stress occurs, the solid electrolyte layer might undulate. However, the solid electrolyte layer, which can exhibit an excellent rigidity, can exhibit excellent strength against stress which may occur during charging and/or discharging. Thus, the electrode group according to the preferred approach can realize a secondary battery capable of exhibiting a more excellent life performance.

In addition to the amount of the binder, the electrode group having the ratio $T_1/T_3$ and the ratio $T_2/T_3$ within the above preferable range can realize a further excellent life performance.

The first portion of the solid electrolyte layer may cover, for example, a surface of the positive electrode active material-containing layer which faces the negative electrode. Likewise, the second portion of the solid electrolyte layer may cover, for example, a surface of the negative electrode active material-containing layer which faces the positive electrode.

The electrode group according to the first approach can have a stack-type structure, for example. In the stack-type structure, for example, plural positive electrodes and plural negative electrodes are stacked such that each positive electrode active material-containing layer and each negative electrode active material-containing layer face each other with a solid electrolyte layer sandwiched therebetween.

Alternatively, the electrode group according to the first approach may have a wound-type structure. In the wound-type structure, a stack is wound. This stack includes a positive electrode, a negative electrode, and a solid electrolyte layer. The solid electrolyte layer is provided between the positive electrode active material-containing layer and the negative electrode active material-containing layer in the stack.

Alternatively, the electrode group according to the first approach may include an electrode having a bipolar structure. In such an electrode group, electrodes each having a bipolar structure are stacked such that each positive electrode active material-containing layer and each negative electrode active material-containing layer face each other with a solid electrolyte layer sandwiched therebetween. Here, the surface of the positive electrode active material-containing layer facing the negative electrode active material-containing layer via the solid electrolyte layer is a surface which is not in contact with the current collector. Likewise, the surface of the negative electrode active material-containing layer facing the positive electrode active material-containing layer via the solid electrolyte layer is a surface which is not in contact with the current collector.

Next, the positive electrode, the negative electrode, the electrode having a bipolar structure, and the solid electrolyte layer will be described in more detail.

1) Positive Electrode

As a positive electrode active material, an oxide or a sulfide can be used, for example. The positive electrode can include one positive electrode active material, or two or more positive electrode active materials. Examples of the oxides and sulfides include compounds into each of which Li or Li ion can be inserted and from each of which Li or Li ion can be extracted.

Examples of such compounds include a manganese dioxide, an iron oxide, a copper oxide, and a nickel oxide, each of which includes lithium, a lithium-manganese composite oxides (for example, $Li_sMn_2O_4$ or $Li_sMnO_2$ ($0 \leq s \leq 1$)), a lithium-nickel-composite oxide (for example, $Li_sNiO_2$ ($0 < s \leq 1$)), a lithium-cobalt-composite oxide (for example, $Li_sCoO_2$ ($0 < s \leq 1$)), a lithium-nickel-cobalt composite oxide (for example, $Li_sNi_{1-t}Co_tO_2$ ($0 < s \leq 1$, $0 \leq t \leq 1$)), a lithium-manganese-cobalt composite oxide (for example, $Li_sMn_tCo_{1-t}O_2$ ($0 \leq s \leq 1$, $0 \leq t \leq 1$)), a lithium manganese nickel composite oxide having a spinel-type crystal structure (for example, $Li_sMn_{2-t}Ni_tO_4$ ($0 < s \leq 1$, $0 \leq t \leq 1$)), a lithium phosphorus oxide having an olivine-type crystal structure (for example, $Li_sFePO_4$, $Li_sFe_{1-t}Mn_tPO_4$, and $Li_sCoPO_4$ ($0 \leq s \leq 1$, $0 \leq t \leq 1$)), an iron sulfate (for example, $Li_sFe_2(SO_4)_3$ ($0 \leq s \leq 1$)), and a vanadium oxide (for example $Li_sV_2O_5$ ($0 \leq s \leq 1$)). In addition, conductive polymer materials such as polyaniline and polypyrrole, and organic and inorganic materials such as disulfide polymer materials may also be used.

The positive electrode active material more preferably contains a compound which can achieve a high battery voltage. Examples of such a compound include the lithium-manganese composite oxide (for example, $Li_sMn_2O_4$), the lithium-nickel composite oxide (for example, $Li_sNiO_2$), the lithium-cobalt composite oxide (for example, $Li_sCoO_2$), the lithium-nickel-cobalt composite oxide (for example, $Li_sNi_{1-t}Co_tO_2$), the lithium-manganese-nickel composite oxide having the spinel-type crystal structure (for example, $Li_sMn_{2-t}Ni_tO_4$), the lithium-manganese-cobalt composite oxide (for example, $Li_sMn_tCo_{1-t}O_2$), and the lithium-iron phosphate (for example, $Li_sFePO_4$). In the above-described formulae, each of s and t is preferably within the above-described range.

Yet other examples of the positive electrode active material include the lithium-nickel-cobalt-manganese composite oxide represented by a formula of $Li_iNi_jCo_kMn_lO_2$; wherein i, j, k, and l satisfy the relationships represented by the inequalities of $0 \leq i \leq 1.1$, $0.1 \leq j \leq 0.5$, $0 \leq k \leq 0.9$, and $0.1 \leq l \leq 0.5$.

The specific surface area of the positive electrode active material particles is preferably from 0.1 $m^2/g$ to 10 $m^2/g$. The positive electrode active material particles having a specific surface area of 0.1 $m^2/g$ or more can secure sufficient sites into which Li ions can be inserted and from which lithium ions can be extracted. The positive electrode active material particles having a specific surface area of 10 $m^2/g$ or less is easy to handle during industrial production, and can secure a good charge-and-discharge cycle performance

The binder is used, as necessary, for filling the gaps among the dispersed positive electrode active material and binding the positive electrode active material and the positive electrode current collector. Examples of the binder include carboxymethyl cellulose (CMC), hydroxypropylmethyl cellulose propyl (HPMC), cellulose acetate, ammonium salt cellulose, polytetrafluoroethylene (PTFE), polyvinylidene fluoride (PVdF), fluorine rubber, styrene-butadiene rubber, polyacrylate compounds (for example, acrylic rubber and acrylic resin), and imide compounds (for example, polyamideimide). One of them may be used alone, or a mixture of two or more of them may be used.

The conductive agent is added for, for example, improving the current-collecting performance and suppressing contact resistance between the positive electrode active material and the positive electrode current collector. Examples of the conductive agent include carbon-based materials such as vapor grown carbon fiber (VGCF), coke, carbon black, graphite, carbon nanofibers, and carbon nanotubes. The average particle size of the carbon-based material is preferably from 0.1 $\mu$m to 10 $\mu$m. When the average particle size is 0.1 $\mu$m or more, gas generation can be effectively suppressed. When the average particle size is 10 $\mu$m or less, good conductive network can be obtained. The specific surface area of the carbon-based material is preferably from 10 m$^2$/g to 100 m$^2$/g. When the specific surface area is 10 m$^2$/g or more, good conductive network can be obtained. When the specific surface area is 100 m$^2$/g or less, gas generation can be effectively suppressed.

In the positive electrode active material-containing layer, the content of the positive electrode active material is preferably within a range of from 80% by mass to 98% by mass, and the content of the binder is preferably within a range of from 2% by mass to 20% by mass.

As for the binder, if the content is 2% by mass or more, sufficient electrode strength can be achieved. If the content of the binder is 20% by mass or less, the content of the insulator in the electrode can be reduced, and thus the internal resistance of the electrode can be reduced.

If the conductive agent is added, the content of the positive electrode active material is preferably within a range of from 77% by mass to 95% by mass, the content of the conductive agent is preferably within a range of from 2% by mass to 20% by mass, and the content of the binder is preferably within a range of from 3% by mass to 15% by mass.

If the content of the conductive agent is 3% by mass or more, the above-described effect can be obtained. If the content of the conductive agent is 15% by mass or less, the ratio of a part of the conductive agent to be contacted with an electrolyte can be reduced. In the case where this ratio is low, the decomposition of the electrolyte can be reduced during storage under high-temperature.

The positive electrode active material-containing layer preferably consists of a positive electrode active material, a binder and a conductive agent. Such a positive electrode active material-containing layer can contain a portion of an electrolyte solution, for example, a liquid nonaqueous electrolyte and/or a gel nonaqueous electrolyte in an electrode group incorporated in a battery. The portion of the electrolyte solution may be contained in pores of the porous positive electrode active material-containing layer, for example. In this preferred aspect, the positive electrode active material-containing layer can exhibit more excellent ion conductivity. As a result, a more excellent output performance and a more excellent cycle life can be realized.

The positive electrode current collector is preferably an aluminum foil or an aluminum alloy foil containing at least one element selected from the group consisting of Mg, Ti, Zn, Ni, Cr, Mn, Fe, Cu and Si.

The thickness of the aluminum foil or aluminum alloy foil is preferably from 5 $\mu$m to 20 $\mu$m, and more preferably 15 $\mu$m or less. The purity of the aluminum foil is 99% by mass or more. The content of a transition metal such as iron, copper, nickel, and chromium contained in the aluminum foil or the aluminum alloy foil is preferably 1% by mass or less.

The positive electrode can be produced by the following method, for example. First, a positive electrode active material, a conductive agent and a binder are suspended in a solvent to prepare a slurry. This slurry is coated onto one surface or both surfaces of the positive electrode current collector. Then, the coated slurry is dried to obtain a stack of the positive electrode active material-containing layer and the positive electrode current collector. Thereafter, this stack is pressed. Thus, a positive electrode is produced. Alternatively, the positive electrode may be produced by the following method. First, a positive electrode active material, a conductive agent and a binder are mixed to obtain a mixture. Then, the mixture is formed into pellets. Then, by arranging these pellets on the positive electrode current collector, a positive electrode can be obtained.

2) Negative Electrode

As a negative electrode active material, a lithium alloy can be used, for example. The lithium alloy preferably includes Li and at least one metal element selected from the group consisting of Si, Al, Zn, Sn, and In. The lithium alloy may include, for example, Li and one element selected from the group consisting of Si, Al, Zn, Sn, and In. Alternatively, the lithium alloy may include Li and two or more elements selected from the group consisting of Si, Al, Zn, Sn, and In. Specific examples include Li-Al, Li-Bi-Cd, and Li-Sn-Cd.

Other examples of the negative electrode active material include, for example, titanium-containing oxides. Examples of the titanium-containing oxide include lithium-titanium composite oxides. Examples of the lithium-titanium oxide include a lithium titanate having a spinel-type crystal structure (for example, $Li_{4+x}Ti_5O_{12}$ ($-1 \leq x \leq 3$)), a lithium titanate having a ramsdellite-type crystal structure (for example, $Li_{2+x}Ti_3O_7$ ($0 \leq x \leq 1$)), $Li_{1+x}Ti_2O_4$ ($0 \leq x \leq 1$), $Li_{1.1+x}Ti_{1.8}O_4$ ($0 \leq x \leq 1$), $Li_{1.07+x}Ti_{1.86}O_4$ ($0 \leq x \leq 1$), and $Li_xTiO_2$ ($0 \leq x \leq 1$). Lithium-titanium composite oxides as described above are characterized by a small volume change during insertion and extraction of lithium.

Other examples of the titanium-containing oxide include titanium oxide. Examples of the titanium oxide include a titanium dioxide $TiO_2$ having an anatase-type crystal structure, and a titanium dioxide $TiO_2$ (B) having a monoclinic crystal structure.

Yet other examples of the negative electrode active material include niobium-containing oxides. Examples of the niobium-containing oxide include a niobium oxide (for example, $Nb_2O_5$), and a niobium-titanium composite oxide having a monoclinic crystal structure (for example, $Nb_2TiO_7$) that exhibits a lithium insertion-and-extraction potential of nobler than 1.0 V with respect to the redox potential of lithium.

Other examples of the active material include the composite oxides having an orthorhombic crystal structure and represented by the following general formula (1) or (2):

$$Li_aM1_{1-b}M2_bTi_{6-c}M3_cO_{14+d} \qquad (1),$$

wherein M1 is at least one selected from the group consisting of Sr, Ba, Ca, and Mg; M2 is at least one selected from the group consisting of Cs, K, and Na; M3 is at least one selected from the group consisting of Al, Fe, Zr, Sn, V, Nb, Ta, and Mo; the subscripts are within the range of $2 \le a \le 6$, $0 < b < 1$, $0 < c \le 6$, and $-0.5 \le d \le 0.5$; M1 may include one selected from the group consisting of Sr, Ba, Ca, and Mg, or a combination of two or more selected from the group; M2 may include one selected from the group consisting of Cs, K, and Na, or a combination of two or more selected from this group; M3 may include one selected from the group consisting of Al, Fe, Zr, Sn, V, Nb, Ta, and Mo, or a combination of two or more selected from this group;

$$Li_{2+w}Na_{2-e}M\alpha_fTi_{6-g}M\beta_gO_{14+h} \qquad (2)$$

wherein $M\alpha$ is at least one selected from the group consisting of Cs and K; $M\beta$ is at least one selected from the group consisting of Zr, Sn, V, Nb, Ta, Mo, W, Fe, Co, Mn, and Al; the subscripts are within the range of $0 \le w \le 4$, $0 < e < 2$, $0 \le f < 2$, $0 < g \le 6$, and $-0.5 \le h \le 0.5$; $M\alpha$ may be one of Cs and K, or may include both of Cs and K; $M\beta$ may include one selected from the group consisting of Zr, Sn, V, Nb, Ta, Mo, W, Fe, Co, Mn, and Al, or a combination of two or more selected from the group consisting of Zr, Sn, V, Nb, Ta, Mo, W, Fe, Co, Mn, and Al.

The composite oxide represented by the general formulae (1) or (2) preferably includes Nb. The preferred composite oxide may be referred to as a niobium-containing composite oxide having an orthorhombic crystal structure.

These composite oxides exhibit a small volume change due to insertion and extraction of lithium. In addition, these composite oxides exhibit a lower operating potential than the lithium titanate having the spinel-type crystal structure. Therefore, the secondary battery including an electrode including any of these composite oxides as a negative electrode can exhibit a higher battery voltage than a secondary battery using the lithium titanate having the spinel-type crystal structure as a negative electrode. In addition, these composite oxides exhibit, in the operating potential range, a charge curve and a discharge curve in each of which the potential changes with a significant gradient without the step of the potential. Therefore, in the nonaqueous electrolyte battery produced by using any of these composite oxides, the state-of-charge can be easily grasped based on the voltage change.

The niobium-containing composite oxide having the orthorhombic crystal structure more preferably further include Na.

Yet other examples of the active material include silicon oxides and silicon alloys. Examples of the silicon oxide include SiO and Si-SiO composites. Examples of the silicon alloy include Si-Sn and Si-Li.

Yet other examples of the active material include metal sulfides. Examples of the metal sulfide include $TiS_2$, FeS, $FeS_2$, NiS, and $MoS_2$.

The negative electrode active material can include particles of one kind of among the above-described active materials, or a mixture of two or more kinds among the above-described active materials. Furthermore, the negative electrode active material can have a particle shape. That is, the negative electrode active material particles may include, for example, at least one kind of particles selected from the group consisting of particles of the lithium titanate having the spinel-type crystal structure, particles of the lithium titanate having the ramsdellite-type crystal structure, particles of the titanium oxide having the anatase crystal structure, particles of the titanium oxide having the monoclinic crystal structure, particles of the niobium-titanium composite oxide having the monoclinic crystal structure, and particles of the niobium-containing composite oxide having the orthorhombic crystal structure.

The specific surface area of the negative electrode active material particles is preferably from 0.1 $m^2$/g to 10 $m^2$/g. The negative electrode active material particles having a specific surface area of 0.1 $m^2$/g or more can secure sufficient sites into which lithium ions can be inserted and from which lithium ions can be extracted. The negative electrode active material particles having a specific surface area of 10 $m^2$/g or less is easy to handle during industrial production, and can secure a good charge-and-discharge cycle performance.

The conductive agent is added for, for example, improving the current-collecting performance and suppressing contact resistance between the negative electrode active material and the current collector. Examples of the conductive agent include carbon-based materials such as vapor grown carbon fiber (VGCF), coke, carbon black, graphite, carbon nanofibers, and carbon nanotubes. The average particle size of the carbon-based material is preferably from 0.1 $\mu$m to 10 $\mu$m. When the average particle size is 0.1 $\mu$m or more, gas generation can be effectively suppressed. When the average particle size is 10 $\mu$m or less, good conductive network can be obtained. The specific surface area of the carbon-based material is preferably from 10 $m^2$/g to 100 $m^2$/g. When the specific surface area is 10 $m^2$/g or more, good conductive network can be obtained. When the specific surface area is 100 $m^2$/g or less, gas generation can be effectively suppressed.

The binder is used for filling the gaps among the dispersed negative electrode active material and binding the negative electrode active material and the negative electrode current collector. Examples of the binder include carboxymethyl cellulose (CMC), hydroxypropylmethyl cellulose propyl (HPMC), cellulose acetate, ammonium salt cellulose, polytetrafluoroethylene (PTFE), polyvinylidene fluoride (PVdF), fluorine rubber, styrene-butadiene rubber, polyacrylate compounds (for example, acrylic rubber and acrylic resin), and imide compounds (for example, polyamideimide). One of them may be used alone, or a mixture of two or more of them may be used.

In the negative electrode active material-containing layer, the content of the negative electrode active material is preferably in a range of from 68% by mass to 96% by mass, the content of the conductive agent is preferably in a range of from 2% by mass to 30% by mass, and the content of the binder is preferably in a range of from 2% by mass to 30% by mass. When the content of the conductive agent is 2% by mass or more, the effect of increasing the current-collecting performance of the negative electrode active material-containing layer can be more enhanced. When the content of the binder is 2% by mass or more, whereby sufficient binding properties between the negative electrode active material-containing layer and the negative electrode current collector can be obtain and then excellent cycle characteristics can be expected. From the viewpoint of higher capacities, on the other hand, the conductive agent and the binder are each preferably set to 28% by mass or less.

As the negative electrode current collector, there can be used a material which is electrochemically stable at lithium insertion-and-extraction potential of the negative electrode active material. The negative electrode current collector is preferably formed from a copper, a nickel, a stainless steel or an aluminum, or an aluminum alloy containing at least one element selected from the group consisting of Mg, Ti, Zn, Mn, Fe, Cu and Si. The thickness of the negative electrode current collector is preferably from 5 $\mu$m to 20 $\mu$m. The negative electrode current collector having such a thickness can exhibit a good balance between the reinforcing and weight saving of the negative electrode.

The density of the negative electrode active material-containing layer (not including the current collector) is preferably from 1.8 g/cm$^3$ to 2.8 g/cm$^3$. The negative electrode including the negative electrode active material-containing layer having such a density can exhibit an excellent energy density and an excellent retention property for an electrolyte. The density of the negative electrode active material-containing layer is more preferably from 2.1 g/cm$^3$ to 2.6 g/cm$^3$.

The negative electrode active material-containing layer preferably consists of a negative electrode active material, a binder and a conductive agent. Such a negative electrode active material-containing layer can contain a portion of an electrolyte solution, for example, a liquid nonaqueous electrolyte and/or a gel nonaqueous electrolyte, in an electrode group incorporated in a battery. The portion of the electrolytic solution may be contained in pores of the porous negative electrode active material-containing layer, for example. In this preferred aspect, the negative electrode active material-containing layer can exhibit a more excellent ion conductivity. As a result, a more excellent output performance and a more excellent cycle life can be realized.

The negative electrode can be produced by the following method, for example. First, a negative electrode active material, a conductive agent and a binder are suspended in a solvent to prepare a slurry. This slurry is coated onto one surface or both surfaces of the negative electrode current collector. Then, the coated slurry is dried to obtain a stack of the negative electrode active material-containing layer and the negative electrode current collector. Thereafter, this stack is pressed. Thus, a negative electrode can be produced. Alternatively, the negative electrode may be produced by the following method. First, a negative electrode active material, a conductive agent and a binder are mixed to obtain a mixture. Then, the mixture is formed into pellets. Then, by arranging these pellets on the negative electrode current collector, a negative electrode can be obtained.

3) Electrode having Bipolar structure

As the current collector which can be included in the electrode having the bipolar structure, for example, a metal foil such as an aluminum foil or an aluminum alloy foil can be used. The thickness of an aluminum foil or an aluminum alloy foil is preferably 20 $\mu$m or less, and more preferably 15 $\mu$m or less. Thereby, a weight saving can be realized while maintaining the strength of the electrode. The purity of the aluminum foil is 99% by mass or more. As an aluminum alloy, an alloy containing an element such as Mg, Zn and Si is preferable. On the other hand, if a transition metal such as Fe, Cu, Ni, and Cr is contained in the aluminum alloy, the content thereof is preferably 1% by mass or less.

As the materials which can be included in the positive electrode active material-containing layer and the materials which can be included in the negative electrode active material-containing layer, the materials described above can be used.

4) Solid Electrolyte Layer

As described above, the solid electrolyte layer includes solid electrolyte particles.

As the solid electrolyte particles, for example, solid electrolyte particles such as inorganic solid particles having Li ion conductivity can be used. The solid electrolyte particles may include one kind of solid electrolyte particles or a combination of two or more kinds of solid electrolyte particles. For example, the first solid electrolyte particles, the second solid electrolyte particles and the third solid electrolyte particles may be the same kind of particles. Alternatively, the kind of the first solid electrolyte particles may be the same as the kind of the second solid electrolyte particles but different from the kind of the third solid electrolyte particles. Alternatively, the kind of the first solid electrolyte particles may be the same as the kind of the third solid electrolyte particles but different from the kind of the second solid electrolyte particles. Alternatively, the kind of the second solid electrolyte particles may be the same as the kind of the third solid electrolyte particles but different from the kind of the first solid electrolyte particles. Alternatively, the kind of the first solid electrolyte particles may be different from the kind of the second solid electrolyte particles and the kind of the third solid electrolyte particles and the kind of the second solid electrolyte particles may be different from the kind of the third solid electrolyte particles. Furthermore, each of the first, second and third solid electrolyte particles may include one kind of solid electrolyte particles or a combination of two or more kinds of solid electrolyte particles.

For inorganic solid particles having Li ion conductivity, it is preferable to use inorganic solid particles having a garnet-type structure because of its high Li-ion conductivity, strength of reduction resistance and an advantage of wide electrochemical window. Examples of the inorganic solid particles having a garnet-type structure include $Li_{5+m}A_mLa_{3-m}M4_2O_{12}$ (A is at least one kind selected from the group consisting of Ca, Sr and Ba. A may be one selected from the group consisting of Ca, Sr and Ba, or may include a combination of two or more selected from the group consisting of Ca, Sr and Ba. M4 is at least one of Nb and Ta. M4 may be either Nb or Ta, or M may include both Nb and Ta. m satisfies $0 \leq m \leq 1.5$), $Li_3M5_{2-n}L2_{O_{12}}$ (M5 is at least one of Ta and Nb. M5 may be either Ta or Nb, or may include both Ta and Nb. L is Zr. n satisfies $0 \leq n \leq 0.5$), $Li_{7-3p}Al_pLa_3Zr_3O_{12}$ ($0 \leq p \leq 0.3$), and $Li_7La_3Zr_2O_{12}$.

Among them, since $Li_{6.25}Al_{0.25}La_3Zr_3O_{12}$ and $Li_7La_3Zr_2O_{12}$ have high Li-ion conductivity (ion conductivity) and are electrochemically stable, they are excellent in discharge performance and cycle life performance.

As described above, the average particle size of the third solid electrolyte particles in the third portion of the solid electrolyte layer is larger than the average particle size of the first solid electrolyte particles in the first portion, and larger than the average particle size of the second solid electrolyte particles in the second portion.

For example, in the design of a secondary battery using solid electrolyte particles and a liquid or gel nonaqueous electrolyte in combination, it is considered preferable to use a solid electrolyte layer into which a liquid or gel nonaqueous electrolyte can sufficiently penetrate. In such a solid electrolyte layer, in order to secure a void capable of sufficiently holding the nonaqueous electrolyte, the packing density is designed to be low. As a specific means, it is conceivable to form solid electrolyte particles having uniform particle sizes as a monolithic solid electrolyte layer. On the other hand, when a particles having different particle sizes are used, the packing density in the solid electrolyte layer increases.

Contrary to this way of thinking, in the electrode group according to the first approach, solid electrolyte particles having different particle sizes are used as described above. The inventors of the present invention found that the solid electrolyte particles themselves can exhibit excellent ion conductivity, so that even when the electrode group according to the first approach is used in combination with a liquid or gel nonaqueous electrolyte, the electrode group can achieve excellent output performance. Should be noted that when a secondary battery is manufactured using the electrode group according to the first approach, a liquid or gel nonaqueous electrolyte is not necessarily used.

The average density of the solid electrolyte layer is preferably from 0.1 $g/cm^3$ to 4.9 $g/cm^3$, and more preferably from 2 $g/cm^3$ to 4.4 $g/cm^3$. The density of the first portion of the solid electrolyte layer is preferably from 0.1 $g/cm^3$ to 4.8 $g/cm^3$, and more preferably from 1.8 $g/cm^3$ to 4.3 $g/cm^3$. The density of the second portion of the solid electrolyte layer is preferably from 0.1 $g/cm^3$ to 4.9 $g/cm^3$, and more preferably from 2 $g/cm^3$ to 4.4 $g/cm^3$. The density of the third portion of the solid electrolyte layer is preferably from 0.2 $g/cm^3$ to 5 $g/cm^3$, and more preferably from 2.2 $g/cm^3$ to 4.5 $g/cm^3$.

The specific surface area of the first solid electrolyte particles in the first portion of the solid electrolyte layer is preferably from 0.3 $m^2/g$ to 30 $m^2/g$. The specific surface area of the second solid electrolyte particles in the second portion of the solid electrolyte layer is preferably from 0.3 $m^2/g$ to 30 $m^2/g$. The specific surface area of the third solid electrolyte particles in the third portion of the solid electrolyte layer is preferably from 0.1 $m^2/g$ to 20 $m^2/g$.

In addition, as described above, the solid electrolyte layer may further include a binder. As examples of binders which can be used, similar those which can be used in the positive electrode active material-containing layer and the negative electrode active material-containing layer can be used.

The solid electrolyte layer may further include cellulose nanofibers and/or inorganic fibers. Examples of the inorganic fiber may include fibers of titanium dioxide ($TiO_2$) having a rutile-type crystal structure, fibers of silicon dioxide ($SiO_2$), fibers of tin oxide ($SnO_2$), and fibers of aluminum oxide ($Al_2O_3$).

5) Other

When the electrode group includes a positive electrode tab (or a positive electrode terminal) which is not a portion of the positive electrode current collector, in order to reduce contact resistance with the positive electrode current collector, the positive electrode tab or the positive electrode terminal is preferably formed of a material similar to that of the positive electrode current collector.

Similarly, when the electrode group includes a negative electrode tab (or a negative electrode terminal) which is not a portion of the negative electrode current collector, in order to reduce contact resistance with the negative electrode current collector, the negative electrode current tab or the negative electrode terminal is preferably formed of a material similar to that of the negative electrode current collector.

Further, when the electrode group includes an electrode group having a bipolar structure and a current collector tab connected to a current collector, in order to reduce contact resistance with the current collector, the current collector tab is preferably formed of a material similar to that of the current collector.

Next, the electrode group according to the first approach will be described in more detail with reference to the drawings.

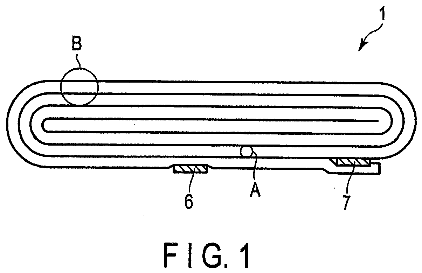

First, an electrode group of a first example according to the first approach will be described with reference to FIGS. 1 to 3.

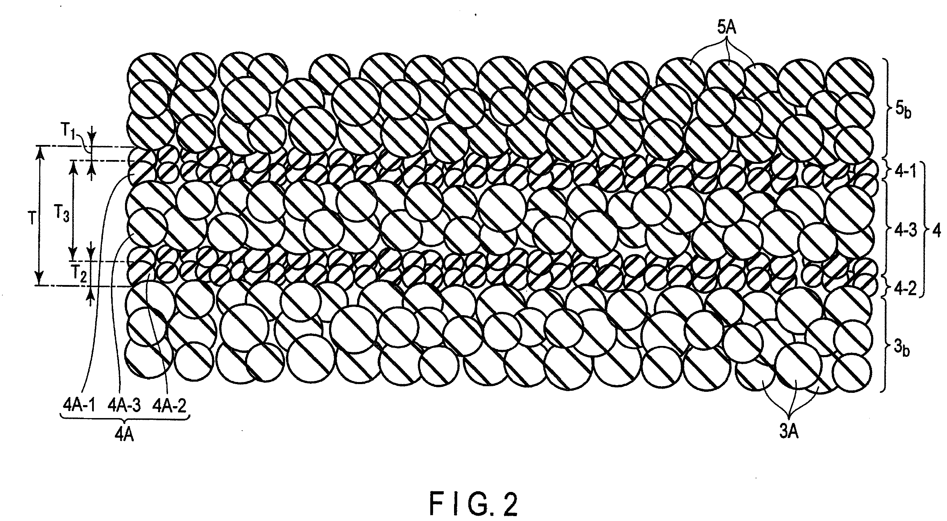

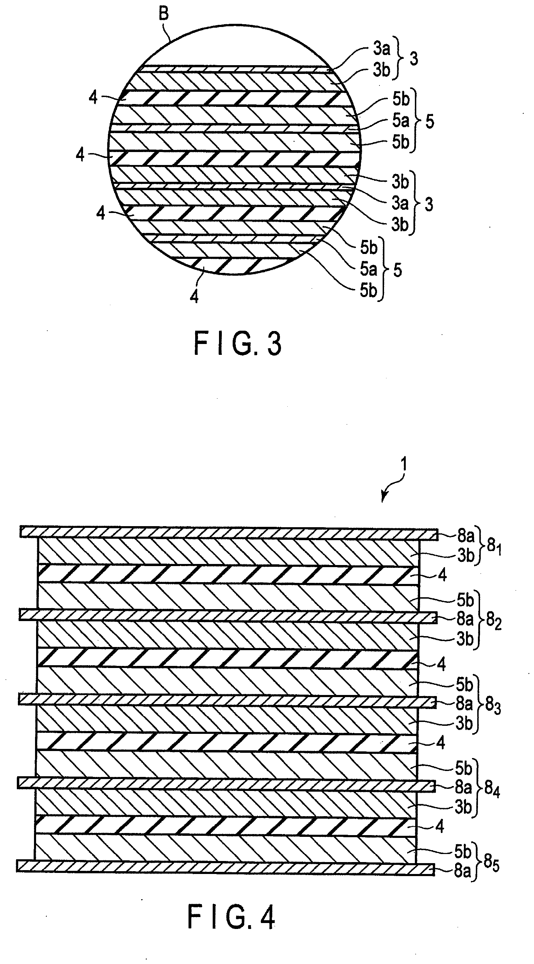

FIG. 1 is a schematic cross-sectional view of the electrode group of the first example according to the first approach. FIG. 2 is an enlarged cross-sectional view of an A portion of the electrode group shown in FIG. 1. FIG. 3 is an enlarged cross-sectional view of a B portion of the electrode group shown in FIG. 1.

The electrode group 1 shown in FIGS. 1 to 3 is a flat wound electrode group. As shown in FIGS. 2 and 3, the flat wound electrode group 1 includes a negative electrode 3, a solid electrolyte layer 4, and a positive electrode 5.

The negative electrode 3 includes a negative electrode current collector 3a and a negative electrode active material-containing layer 3b. In a portion of the negative electrode 3 located at the outermost shell of the wound electrode group 1, as shown in FIG. 3, the negative electrode active material-containing layer 3b is formed only on the inner surface of the negative electrode current collector 3a. In the other portion of the negative electrode 3, the negative electrode active material-containing layers 3b are formed on both surfaces of the negative electrode current collector 3a. As shown in FIG. 2, the negative electrode active material-containing layer 3b includes negative electrode active material particles 3A. The negative electrode active material-containing layer 3b further includes a conductive agent and a binder (not shown).

The positive electrode 5 includes a positive electrode current collector 5a and a positive electrode active material-containing layer 5b provided on both surfaces of the positive electrode current collector 5a. As shown in FIG. 2, the positive electrode active material-containing layer 5b includes of positive electrode active material particles 5A. The positive electrode active material-containing layer 5b further includes a conductive agent and a binder (not shown).

As shown in FIG. 1, the negative electrode terminal 6 and the positive electrode terminal 7 are located near an outer peripheral end of the wound electrode group 1. The negative electrode terminal 6 is connected to a portion of the negative electrode current collector 3a of the negative electrode 3 located at the outermost shell. On the other hand, the positive electrode terminal 7 is connected to the positive electrode current collector 5a of the positive electrode 5 located at the outermost shell.

As shown in FIGS. 2 and 3, the solid electrolyte layer 4 is provided between the negative electrode 3 and the positive electrode 5, more specifically, between the negative electrode active material-containing layer 3b and the positive electrode active material-containing layer 5b.

As shown in FIG. 2, the solid electrolyte layer 4 includes solid electrolyte particles 4A. In addition, the solid electrolyte layer 4 further includes a binder (not shown).

The solid electrolyte layer 4 includes a first portion 4-1 in contact with the positive electrode, a second portion 4-2 in contact with the negative electrode, and a third portion 4-3 provided between the first portion 4-1 and the second portion 4-2.

The first portion 4-1 includes first solid electrolyte particles 4A-1 in contact with a portion of the positive electrode active material particles 5A and a binder (not shown). The second portion 4-2 includes second solid electrolyte particles 4A-2 in contact with a portion of the negative electrode active material particles 3A and a binder (not shown). The third portion 4-3 includes third solid electrolyte particles 4A-3 and a binder (not shown).

In the electrode group shown in FIGS. 1 to 3, the average particle size $D_3$ (unit: $\mu$m) of the third solid electrolyte particles 4A-3 in the third portion 4-3 of the solid electrolyte layer 4 is larger than the average particle size $D_1$ (unit: $\mu$m) of the first solid electrolyte particles 4A-1 in the first portion 4-1. Further, the average particle size $D_3$ of the third solid electrolyte particles 4A-3 in the third portion 4-3 of the solid electrolyte layer 4 is larger than the average particle size $D_2$ (unit: $\mu$m) of the second solid electrolyte particles 4A-2 in the second portion 4-2.

Further, in the electrode group shown in FIGS. 1 to 3, the average particle size $D_C$ (unit: $\mu$m) of the positive electrode active material particles 5A is larger than the average particle size $D_1$ (unit: $\mu$m) of the first solid electrolyte particles 4A-1 in the first portion 4-1 of the solid electrolyte layer 4. The average particle size $D_A$ (unit: $\mu$m) of the negative electrode active material particles 3A is larger than the average particle size $D_2$ (unit: $\mu$m) of the second solid electrolyte particles 4A-2 in the second portion 4-2 of the solid electrolyte layer 4.

In the electrode group shown in FIGS. 1 to 3, the thickness $T_3$ (unit: $\mu$m) of the third portion 4-3 of the solid electrolyte layer 4 is larger than the thickness $T_1$ (unit: $\mu$m) of the first portion 4-1. Further, the thickness $T_3$ of the third portion 4-3 of the solid electrolyte layer 4 is larger than the thickness $T_2$ (unit: $\mu$m) of the second portion 4-2.

Next, a second example of the electrode group according to the first approach will be described with reference to FIG. 4.

FIG. 4 is a schematic cross-sectional view of the electrode group of the second example according to the first approach.

The electrode group 1 shown in FIG. 4 includes a negative electrode $8_1$, a positive electrode $8_5$, plural (for example, three) electrodes $8_2$, $8_3$ and $8_4$ each having a bipolar structure, and four solid electrolyte layers 4 each provided between the electrodes.

As shown in FIG. 4, the negative electrode $8_1$ includes a belt-like current collector 8a and a negative electrode active material-containing layer 3b provided on one surface of the current collector 8a.

As shown in FIG. 4, each of the three electrodes $8_2$, $8_3$, and $8_4$ has a belt-like current collector 8a, a negative electrode active material-containing layer 3b formed on one surface of the current collector 8a, and a positive electrode active material-containing layer 5b provided on the other surface of the current collector 8a.

As shown in FIG. 4, the positive electrode $8_5$ includes a belt-like current collector 8a and a positive electrode active material-containing layer 5b formed on one surface of the current collector 8a.

The three electrodes $8_2$, $8_3$ and $8_4$ are stacked as shown in FIG. 4. Specifically, the negative electrode active material-containing layer 3b of the electrode $8_2$ faces the positive electrode active material-containing layer 5b of the electrode $8_3$ via the solid electrolyte layer 4. The negative electrode active material-containing layer 3b of the electrode $8_3$ faces the positive electrode active material-containing layer 5b of the electrode $8_4$ via the solid electrolyte layer 4.

As shown in FIG. 4, the negative electrode $8_1$ is placed on the electrode $8_2$ such that the negative electrode active material-containing layer 3b of the electrode $8_1$ faces the positive electrode active material-containing layer 5b of the electrode $8_2$ via the solid electrolyte layer 4.

As shown in FIG. 4, the electrode $8_5$ is disposed under the electrode $8_4$ such that the positive electrode active material-containing layer 5b of the electrode $8_5$ faces the negative electrode active material-containing layer 3b of the electrode $8_4$ via the solid electrolyte layer 4.

The four solid electrolyte layers 4 shown in FIG. 4 have structures similar to the structure shown in FIG. 2.

[Manufacturing Method]

The electrode group according to the first approach can be manufactured by the following method, for example.

(First example)

First, a positive electrode and a negative electrode are produced.

Meanwhile, first solid electrolyte particles, second solid electrolyte particles, third solid electrolyte particles, and a binder for a solid electrolyte layer are provided, respectively. Here, the third solid electrolyte particles having an average particle size larger than the average particle size of the first solid electrolyte particles and larger than the average particle size of the second solid electrolyte particles are provided.

Subsequently, the first solid electrolyte particles and the binder are put into an appropriate solvent, such as NMP or water, and stirred to obtain a first coating material. Similarly, the second solid electrolyte particles and the binder are put into an appropriate solvent and stirred to obtain a second coating material. Similarly, the third solid electrolyte particles and the binder are put into an appropriate solvent and stirred to obtain a third coating material. Here, the amount of the binder (the mass of the binder relative to the mass of the solid electrolyte particles) contained in the third coating material can be made smaller than the amount of the binder contained in the first coating material. Also, the amount of the binder contained in the third coating material can be made smaller than the amount of the binder contained in the second coating material.

On the other hand, a furnace is provided. The furnace to be provided includes first and second conveyors capable of conveying the electrodes in the same direction along the gravity direction. These conveyors can convey the electrodes, for example, from the floor to the ceiling of a working room. The conveying direction may be a direction from the ceiling to the floor. The furnace further includes a drying zone capable of applying heat in sequence to an object to be processed, which is carried by the conveyor. In addition, the furnace has three die heads including the first to third die heads upstream of the drying zone in the conveying direction of the object to be processed. The first die head is in fluid communication with a first container. The second die head is in fluid communication with a second container. The third die head is in fluid communication with a third container. The first die head is oriented to eject a first fluid in the first container on the object to be processed on the first conveyor. The second die head is oriented to eject a second fluid in the second container on the first fluid ejected onto the object to be processed. The third die head is oriented to eject a third fluid in the third container on the second fluid ejected onto the first fluid.

Then, the first coating material is put in the first container, the third coating material is put in the second container, and the second coating material is put in the third container.

Then, the positive electrode is installed on the first conveyor, and the negative electrode is installed on the second conveyor.

Then, while the first conveyor transports the positive electrode, the first coating material, the third coating material and the second coating material are ejected in sequence onto the positive electrode using the three die heads. In this furnace, since the conveying direction is along the gravity direction, even if the third coating material containing the third solid electrolyte particles having a large average particle size is ejected onto the first coating material, the first coating material and the third coating material can be prevented from mixing with each other.

The negative electrode on the second conveyor is then brought into contact with the second coating material. Thus, a composite can be obtained.

The composite is heated in the drying zone to volatilize the solvent contained in each coating material. Thus, a minimum unit of the electrode group according to the first approach can be obtained. A drying time can be adjusted by, for example, the length of the drying zone.

(Second example)

In this example, the positive electrode, the negative electrode, the first coating material, the second coating material, and the third coating material are provided by the same procedure as the first example.

On the other hand, a furnace provided in this example includes the first and second two conveyors, but the conveying directions of the conveyors are not particularly limited. The furnace provided in this example includes a first die head, a first drying zone, a second die head, a second drying zone, a third die head, a third drying zone, and a fourth drying zone in sequence from upstream to downstream in the conveying direction of the conveyor.

The first to third die heads are oriented to eject the first coating material, the third coating material and the second coating material onto an object to be processed on the conveyor, respectively.

The positive electrode is installed on the first conveyor of this furnace, and the negative electrode is installed on the second conveyor. Then, while the positive electrode is conveyed by the first conveyor, the first coating material is ejected onto the positive electrode by the first die head. Thereafter, by passing the positive electrode through the first drying zone, a portion of the solvent contained in the first coating material is volatilized, and a first portion of the solid electrolyte layer is formed in a half-dried state. Then, the third coating material is ejected onto the first portion of the solid electrolyte layer by the second die head. Thereafter, by passing the positive electrode through the second drying zone, a portion of the solvent contained in the third coating material is volatilized, and a third portion of the solid electrolyte layer is formed in a half-dried state. Then, the second coating material is ejected onto the third portion of the solid electrolyte layer by the third die head. Thereafter, by passing the positive electrode through the third drying zone, a portion of the solvent contained in the second coating material is volatilized, and a second portion of the solid electrolyte layer is formed in a half-dried state. Then, the negative electrode on the second conveyor is brought into contact with the second portion of the solid electrolyte layer. Thus, a composite is obtained. This composite is passed through the fourth drying zone to volatilize the solvent remaining in the first portion to the third portion of the solid electrolyte layer (main drying). Thus, a minimum unit of the electrode group according to the first approach can be obtained.

Should be noted that, in the above examples, not the positive electrode but the negative electrode may be installed on the first conveyor. However, in this case, the second coating material is ejected onto the negative electrode. An electrode group including solid electrolyte layers can be obtained by, for example, repeating the methods of the above examples.

<Measurement Method>

(Average Particle Size and Thickness of Layer)

The average particle size of particles included in a secondary battery can be measured by the following procedure.

First, a battery including an electrode group to be measured is provided.

Then, the provided battery is subjected to charging or discharging using a charging-and-discharging device, and adjusted to approximately SOC 30% to 80%, preferably SOC 40% to 60%. The battery thus discharged is disassembled in a glove box filled with, for example, argon. Then, while paying attention such that the positive electrode and the negative electrode are not energized, the electrode group is taken out.

Then, the taken-out electrode group is thoroughly washed with diethyl carbonate (abbreviated as DEC). Then, the washed electrode group is transferred into an evacuable container. The pressure inside this container is reduced to minus 100 kPa, and this condition is maintained for 1 hour. Then, the amount of pressure in the container is returned to atmospheric pressure in an argon atmosphere. When a nonaqueous electrolyte solution is contained in the electrode group, the nonaqueous electrolyte solution can be removed by this operation. This process can be omitted if the nonaqueous electrolyte solution is not contained in the battery to be measured.

Then, the washed electrode group is cut in the stacking direction of the electrodes. In the cutting, a focused ion beam (FIB) is used. Consequently, a cut surface can be obtained without destroying the tissue structure. Upon cutting, when a planar shape of the taken-out electrode group is a quadrilateral shape (or other polygonal shape), cutting is performed such that a cross section parallel to the diagonal line of the surface of the electrode group and to the direction in which the electrodes are stacked is obtained. Alternatively, when the planar shape of the taken-out electrode group is circular (or substantially circular shape including elliptical shape), cutting is performed such that a cross section parallel to the diameter line of the circle of the electrode group and to the direction in which the electrodes are stacked is obtained.

The cut surface thus obtained is observed up to both ends using a scanning electron microscope (SEM). In a SEM image obtained by this observation, measurements are made on each particle included in the positive electrode, the negative electrode, and each portion of the solid electrolyte layer. Upon measurement, at least 100 particles are measured. An average value of measurement results at 100 points is taken as the average particle size.

Here, the particle size can be determined as follows. First, a minimum circumscribed circle is drawn for the particles to be measured selected in the SEM image obtained as described above. The diameter of the minimum circumscribed circle is defined as the particle size.

The thickness of each layer included in a cross-sectional SEM image is measured at ten points, and the average value is taken, whereby the thickness of each layer can be calculated.

(Density Measurement Method)

First, a periphery of the electrode group taken out from the secondary battery as described above is hardened with a resin packaging material such as epoxy so as not to penetrate into the electrode group. Then, the electrode group is cut out using, for example, a dicer, and a portion to be measured in the solid electrolyte layer is exposed by surface polishing. A portion of the exposed portion is peeled off from the electrode group, and the weight and the volume are measured. From the measurement results, density can be calculated. Alternatively, the weight and the volume of the entire electrode are measured in a state in which the portion to be measured is exposed according to the above method, and then the target portion of the solid electrolyte layer is further polished and scraped off by surface polishing. The weight and the volume of the entire electrode after scraping are measured, and the weight and the volume of the target portion of the solid electrolyte layer can be calculated from differences therebetween.

(Particle Size Distribution Measurement Method and Composition Analysis Method)

A particle size distribution of solid electrolyte particles can be measured by the following procedure.

From the electrode group taken out from the battery and washed as described above, only the solid electrolyte layer is scraped off by the SAICAS (Surface and Inter-facial Cutting Analysis System) method. Thus, the solid electrolyte layer can be separated from the electrode group.

Then, the solid electrolyte layer is washed with an appropriate solvent and dried under reduced pressure at 60°C for 12 hours. As the washing solvent, for example, N-methyl-2-pyrrolidone, pure water, ethyl methyl carbonate or the like can be used. Upon washing, a loose aggregation is loosened with an ultrasonic washer. Thus, a mixture of solid electrolyte particles is obtained.

The mixture of the solid electrolyte particles obtained as described above is dispersed in pure water and subjected to centrifugal separation. Each centrifuged portion is collected using a freeze-drying apparatus. Thus, solid electrolyte particles having different compositions and/or different particle sizes can be separated from the mixture. Various characteristics of particles included in the solid electrolyte layer can be investigated by subjecting each of the separated particles to powder X-ray diffraction measurement, particle size distribution measurement, specific surface area measurement according to a BET method, and ion conductivity measurement. Of course, each particle can also be subjected to analysis other than these methods. In the particle size distribution measurement, a laser diffraction scattering method is used. As the particle size distribution measuring apparatus, for example, MT-3300 EXII manufactured by MicrotracBEL Corp. can be used.

Information on the solid electrolyte particles included in each portion of the solid electrolyte layer can be obtained by comparing these results with the average particle size obtained from a cross-sectional SEM image.

[Powder X-ray Diffraction Measurement]

A crystal structure of each particle can be investigated by subjecting each particle separated from the solid electrolyte layer as described above to a powder X-ray diffraction method using a Cu-K$\alpha$ radiation source.

First, particles as target samples are ground to prepare a sample having an average particle size of about 5 $\mu$m. The average particle size can be obtained by a laser diffraction method. The obtained sample is filled in a holder portion formed on a glass sample plate and having a depth of 0.2 mm. At this time, attention is paid such that the sample is sufficiently filled in the holder portion.

Then, another glass plate is pressed against the filled sample from the outside, and a surface of the filled sample is smoothed. Care is taken to fill an appropriate amount of the sample so as not to cause cracks, voids, irregularities or the like in the filled sample. Also, be careful to press the glass plate with sufficient pressure.

Then, the glass plate filled with the sample is loaded in a powder X-ray diffraction apparatus. In this apparatus, the sample is subjected to measurement according to a X-ray diffraction method using a parallel beam method of a Cu-$K\alpha$ radiation source to obtain a powder X-ray diffraction pattern. In the measurement, a $K\beta$ filter or a monochromator is used. Measurement conditions are as follows: scanning speed is 5 deg/min; step width is 0.2 deg; tube voltage is 40 kV; and tube current is 300 mA.

[Powder X-Ray Diffraction of Active Material Particles]

The powder X-ray diffraction pattern of each of the positive electrode active material particles and the negative electrode active material particles included in an electrode group can be obtained according to the following procedure.

From the electrode group which had been washed as described above, the electrode including the active material particles to be measured is taken out. The taken-out electrode is washed by using appropriate solvent, and then is subjected to the drying under reduced pressure. For example, ethylmethyl carbonate can be used. After washing and drying, whether or not there are white precipitates such as a lithium salt on the surface is checked.

Next, the washed electrode is cut into a size having the same area as that of a holder in the powder X-ray diffraction apparatus, for used as a measurement sample.

The obtained measurement sample is directly attached to the glass holder, and measured. In this case, the position of the peak derived from the electrode substrate such as a metal foil is previously measured. The peaks of other components such as a conductive agent and a binder are also previously measured. When the peaks of the substrate and active material overlap to each other, it is desirable that the layer including the active material is separated from the substrate, and subjected to measurement. This is a process for separating the overlapping peaks when the peak intensity is quantitatively measured. For example, the active material layer can be separated by irradiating the electrode substrate with an ultrasonic wave in a solvent. The active material layer is inserted into the capillary, mounted on the rotary sample table, and measured. As a result of this process, the XRD pattern of the active material can be obtained with the influence of the orientation reduced.

[Composition Analysis of Active Material Particles]

Composition of each of the positive electrode active material particles and the negative electrode active material particles included in an electrode group can be obtained according to the following procedure.

The composition of the active material can be analyzed using Inductively Coupled Plasma (ICP) emission spectroscopy, for example. At that time, the abundance ratios of elements depend on the sensitivity of an analyzing device to be used. Therefore, when the composition of the active materia is analyzed, for example, using ICP emission spectroscopy, the numerical values may deviate due to errors of the measuring device from the previously described element ratios.

In order to measure the composition of the active material for a battery included in the battery according to ICP emission spectroscopy, the following procedure is specifically performed. First, according to the previously described procedure, an electrode including an active material to be measured is taken out from a battery, and washed. The washed electrode is put in a suitable solvent, and irradiated with an ultrasonic wave. For example, an electrode is put into ethyl methyl carbonate in a glass beaker and the glass beaker is vibrated in an ultrasonic washing machine, and thereby a layer including an electrode active material can be separated from a current collector. Next, the separated electrode layer is dried under reduced pressure. The obtained layer is ground in a mortar or the like to obtain a powder containing the target active material, conductive agent, and binder or the like. By dissolving the powder in an acid, a liquid sample containing the active material can be prepared. At this time, hydrochloric acid, nitric acid, sulfuric acid, and hydrogen fluoride or the like can be used as the acid. The composition of the active material can be found by subjecting the liquid sample to ICP emission spectroscopic analysis.

According to the first approach, an electrode group is provided. The electrode group includes a positive electrode, a negative electrode, and a solid electrolyte layer. The solid electrolyte layer is provided between the positive electrode and the negative electrode. The solid electrolyte layer includes a first portion including first solid electrolyte particles in contact with the positive electrode, a second portion including second solid electrolyte particles in contact with the negative electrode, and a third portion provided between the first and second portions and including third solid electrolyte particles. The average particle size of the third solid electrolyte particles is larger than the average particle size of the first solid electrolyte particles, and larger than the average particle size of the second solid electrolyte particles. Thus, in the electrode group according to the first approach, the number of contacts between the positive electrode and the solid electrolyte and the number of contacts between the negative electrode and the solid electrolyte are increased, so that it is possible to promote the delivery of lithium ions between each of the positive electrode and the negative electrode and the solid electrolyte layer. On the other hand, since the average particle size of the solid electrolyte particles in the third portion which is the intermediate portion is large, the interface between the particles in this portion can be reduced. As the results, the electrode group according to the first approach can realize a secondary battery capable of exhibiting an excellent output performance.

(Second Approach)

According to the second approach, a secondary battery is provided. The secondary battery includes the electrode group according to the first approach.

The secondary battery according to the second approach may further include an electrolyte other than the solid electrolyte particles. The secondary battery according to the second approach may further include, for example, a liquid nonaqueous electrolyte and/or a gel nonaqueous electrolyte. That is, the secondary battery according to the second approach may be a nonaqueous electrolyte battery. Alternatively, the secondary battery according to the second approach may further include, for example, an electrolyte in an aqueous solution. The electrolyte other than the solid electrolyte particles can be contained, for example, in the electrode group.

The secondary battery according to the second approach may further include a container member that houses the electrode group and the optional further electrolyte.

The secondary battery according to the second approach may furthermore include a negative electrode terminal electrically connected to the negative electrode and a positive electrode terminal electrically connected to the positive electrode.

Hereinafter, the liquid nonaqueous electrolyte, the gel nonaqueous electrolyte, the container member, the negative electrode terminal, and the positive electrode terminal will be described in more detail.

A) Liquid Nonaqueous Electrolyte

A liquid nonaqueous electrolyte can be prepared by dissolving an electrolyte in an organic solvent. The concentration of the electrolyte is preferably from 0.5 to 2.5 mol/L.

Examples of the electrolyte include lithium salts such as a lithium perchlorate ($LiClO_4$), a lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide ($LiN(CF_3SO_2)_2$), and mixtures thereof. The electrolyte is preferably one which is hard to be oxidized even at a high electric potential, and most preferably $LiPF_6$.

Examples of the organic solvent include cyclic carbonates such as propylene carbonate (PC), ethylene carbonate (EC), and vinylene carbonate; linear carbonates such as diethyl carbonate (DEC), dimethyl carbonate (DMC), and methylethyl carbonate (MEC); cyclic ethers such as tetrahydrofuran (THF), 2-methyltetrahydrofuran (2-MeTHF), and dioxolane (DOX); linear ethers such as dimethoxyethane (DME), and diethoxyethane (DEE); $\gamma$-butyrolactone (GBL), acetonitrile (AN), and sulfolane (SL). One of these organic solvents may be used alone, or two or more of these solvents may be used as a mixed solvent.

Alternatively, as a liquid nonaqueous electrolyte, there can be used an ordinary-temperature molten salt (ionic melts). The ordinary-temperature molten salt (ionic melt) means compounds which can exist in a liquid state at ordinary temperature (15 to 25°C), among organic salts constituted of combinations of organic cations and anions. The ordinary-temperature molten salt includes an ordinary-temperature molten salt which exists alone as a liquid, an ordinary-temperature molten salt which becomes a liquid after being mixed with an electrolyte, an ordinary-temperature molten salt which becomes a liquid after being dissolved in an organic solvent, and mixtures thereof. In general, the melting point of the ordinary-temperature molten salt used in nonaqueous electrolyte batteries is 25°C or below. The organic cations generally have a quaternary ammonium skeleton.

The mass of the liquid nonaqueous electrolyte included in the nonaqueous electrolyte battery is preferably from 0.1% by mass to 20% by mass and more preferably from 1% by mass to 10% by mass with respect to the mass of the solid electrolyte particles included in the electrode group according to the first approach, that is, the total of mass of the first, second and third solid electrolyte particles. The nonaqueous electrolyte battery including the liquid nonaqueous electrolyte in an amount within the above preferable range can achieve an excellent balance among an output performance, a cycle life and an energy density.

B) Gel Nonaqueous Electrolyte

The gel nonaqueous electrolyte can be prepared by mixing a liquid nonaqueous electrolyte and a polymer material to obtain a composite. Examples of polymer materials include polyvinylidene fluoride (PVdF), polyacrylonitrile (PAN), polyethylene oxide (PEO), and mixtures thereof.

The mass of the gel nonaqueous electrolyte contained in the nonaqueous electrolyte battery is preferably from 0.2% by mass to 30% by mass and more preferably from 1% by mass to 20% by mass with respect to the mass of the solid electrolyte particles included in the electrode group according to the first approach, that is, the total of mass of the first, second and third solid electrolyte particles. The secondary battery including the gel nonaqueous electrolyte in an amount within the above preferable range can achieve an excellent balance among an output performance, a cycle life and an energy density.

C) Container Member

As the container member, a container formed of a laminate film or a metallic container can be used, for example.

The thickness of the laminate film is, for example, 0.5 mm or less, preferably 0.2 mm or less.

The laminate film is a multilayer film including a resin layers and a metal layer sandwiched the resin layers. The resin layer may include, for example, a polymer such as polypropylene (PP), polyethylene (PE), nylon, and polyethylene terephthalate (PET). The metal layer is preferably an aluminum foil or an aluminum alloy foil for reducing weight. The laminate film can be formed into the shape of the container member through sealing by thermal fusion bonding.

The wall thickness of the metallic container is, for example, 1 mm or less, more preferably 0.5 mm or less, and still preferably 0.2 mm or less.

The metallic container is formed of, for example, an aluminum or an aluminum alloy. The aluminum alloy preferably contains an element such as magnesium, zinc, and silicon. The content of transition metals such as iron, copper, nickel, and chromium in the aluminum alloy is preferably 100 ppm or less.

The shape of the container member is not particularly limited. The shape of the container member may be flat shape (slim shape), prismatic shape, cylindrical shape, coin shape, or button shape. The shape and sized of the container member can be appropriately designed according to the battery dimension. For example, the container member may have a size for a compact battery mounted on mobile electronic devices and the like, and a large battery mounted on two- to four-wheel automobiles and rail-way vehicles and the like.

D) Negative Electrode Terminal

The negative electrode terminal may be formed of a conductive material which is electrochemically stable at a Li-insertion-and-extraction potential of the negative electrode active material, and has an electric conductivity. More specifically, the negative electrode terminal is preferably formed from a copper, nickel, stainless steel, or an aluminum or an aluminum alloy containing an element such as Mg, Ti, Zn, Mn, Fe, Cu, and Si. As material of the negative electrode terminal, an aluminum or an aluminum alloy is preferably used. To reduce contact resistance with the negative electrode current collector, the negative electrode terminal is preferably formed from a material similar to that of the negative electrode current collector.

E) Positive Electrode Terminal

The positive electrode terminal may be formed of a conductive material being electrically stable at a potential within the range from 3.0 V (vs. Li/Li$^+$) to 4.5 V (vs. Li/Li$^+$) with respect to the redox potential of lithium. A material of the positive electrode terminal is preferably aluminum or an aluminum alloy containing at least one element selected from the group consisting of Mg, Ti, Zn, Mn, Fe, Cu, and Si. In order to reduce contact resistance with the positive electrode current collector, the positive terminal is preferably formed of a material similar to that of the positive electrode current collector.

Next, specific examples of a secondary battery according to the second approach will be described with reference to the drawings.

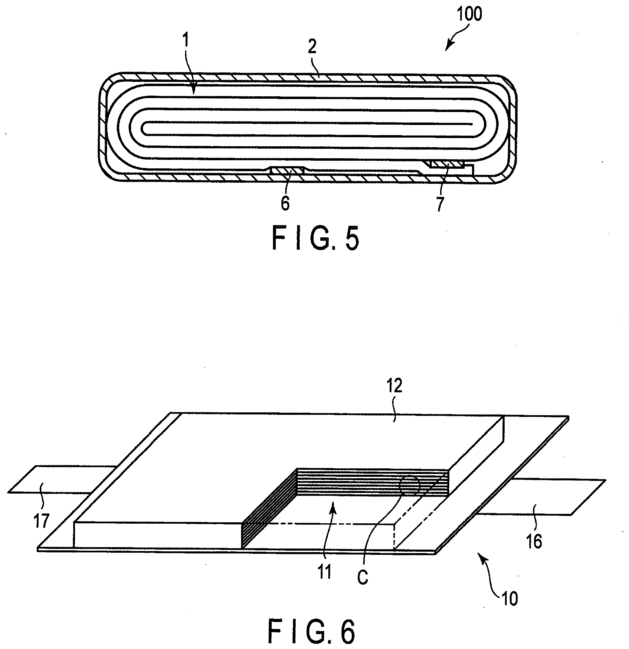

FIG. 5 is a schematic cross-sectional view of a secondary battery of a first example according to the second approach.

A secondary battery 100 shown in FIG. 5 includes a bag-shaped container member 2, an electrode group 1, and a liquid nonaqueous electrolyte (not shown). That is, the secondary battery 100 shown in FIG. 5 is a nonaqueous electrolyte battery. The electrode group 1 and the liquid nonaqueous electrolyte (not shown) are accommodated in the container member 2. The liquid nonaqueous electrolyte (not shown) is contained in the electrode group 1.

The bag-shaped container member 2 is made of a laminate film including two resin layers and a metal layer sandwiched the resin layers.

The electrode group 1 is the electrode group of the first example according to the first approach, which is described with reference to FIG. 1 to 3. The negative electrode terminal 6 connected to the negative electrode current collector 3a of the electrode group 1, and the positive electrode terminal 7 connected to the positive electrode current collector of the electrode group 1 extend to the outside from an opening part of the bag-like container member 2. The bag-like container member 2 is heat-sealed with a thermoplastic resin layer provided on the inner surface thereof.

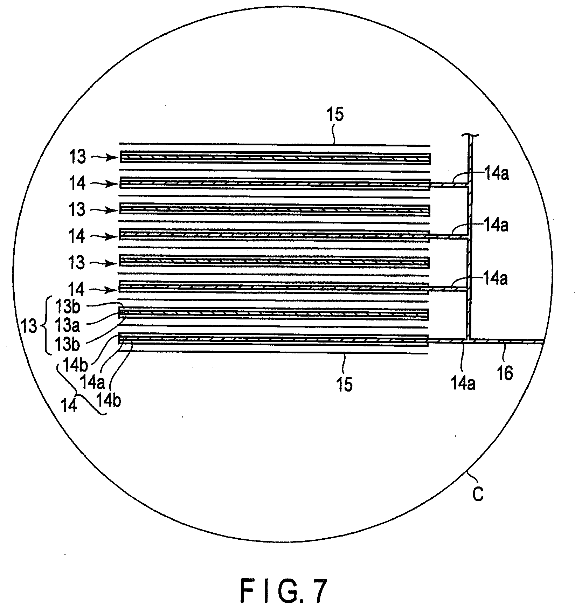

The secondary battery according to the second approach is not limited to the secondary battery having the structure shown in FIG. 5, and may be a secondary battery having a structure shown in FIGS. 6 and 7.

FIG. 6 is a partially cutaway perspective view schematically showing a secondary battery of a second example according to the second approach. FIG. 7 is an enlarged cross-sectional view of a C portion of the secondary battery shown in FIG.6.

A secondary battery 10 shown in FIGS. 6 and 7 includes an electrode group 11 shown in FIGS. 6 and 7, a container member 12 shown in FIG. 6, and a liquid nonaqueous electrolyte (not shown). That is, the secondary battery 10 shown in FIG. 6 and 7 is a nonaqueous electrolyte battery. The electrode group 11 and the liquid nonaqueous electrolyte are accommodated in the container member 12. The nonaqueous electrolyte is contained in the electrode group 11.

The container member 12 is made of a laminate film including two resin layers and a metal layer sandwiched the resin layers.

As shown in FIG. 7, the electrode group 11 is stack-type electrode group. The stack-type electrode group 11 has a structure in which positive electrodes 13 and negative electrodes 14 are alternately stacked with solid electrolyte layers each of which is sandwiched between one of the positive electrodes 13 and one of the negative electrodes 14. Note that, in FIGS. 7, for the sake of clarity, there are spaces between the positive electrode 13 and the solid electrolyte layer 15, and the negative electrode and the solid electrolyte layer 15. However, in practice, the solid electrolyte layer 15 is in contact with the positive electrode 13 and the negative electrode 14.

The electrode group 11 includes the positive electrodes 13. Each of the positive electrodes 13 includes a positive electrode current collector 13a, and a positive electrode active material-containing layer 13b supported on each of the both surfaces of the positive electrode current collector 13a. In addition, the electrode group 11 includes the negative electrodes 14. Each of the negative electrodes 14 includes a negative electrode current collector 14a, and a negative electrode layer 14b supported on each of the both surfaces of the negative electrode current collector 14a. A part of the negative electrode current collector 14a of each of the negative electrodes 14 protrudes from the positive electrodes 13. The protruded part of the negative electrode current collector 14a is electrically connected to a strip-shaped negative electrode terminal 16. The tip of the strip-shaped negative electrode terminal 16 is extended out from the container member 12. Although not shown in the drawings, a part of the positive electrode current collector 13a of the positive electrode 13, which is located at the side opposed to the protruded part of the negative electrode current collector 14a, protrudes from the negative electrode 14. The protruded part of the positive electrode current collector 13a is electrically connected to a strip-shaped positive electrode terminal 17, although not shown in the drawings. The tip of the strip-shaped positive electrode terminal 17 is located at the opposed side to the negative electrode terminal 16, and extended out from a side of the container member 12.

Each of the solid electrolyte layer 15 has the same structure as that of the solid electrolyte layer 4 shown in FIG. 2.

Besides, the electrode group included in the secondary battery according to the second approach may be, for example, an electrode group having the structure as shown in FIG. 4.

The secondary battery according to the second approach includes the electrode group according to the first approach. Thus, the secondary battery according to the second approach can exhibit an excellent output performance.

(Third Approach)

According to a third approach, a battery module is provided. The battery module according to the third approach includes secondary batteries each according to the second approach.

In the battery module according to the third approach, each of the single-batteries may be electrically connected and arranged in series, in parallel, or in a combination of series connection and parallel connection.

Next, an example of a battery module according to the third approach will be described with reference to the drawings.

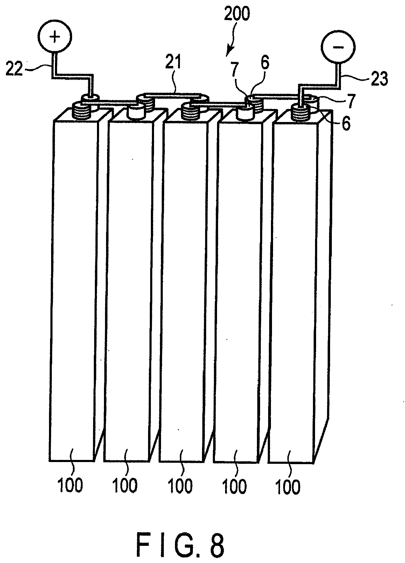

FIG. 8 is a perspective view schematically showing one example of a battery module according to the third approach. A battery module 200 shown in FIG. 8 includes five single-batteries 100, four bus bars 21, a positive electrode-side lead 22, and a negative electrode-side lead 23. Each of the five single-batteries 100 is a secondary battery according to the second approach.

Each bus bar 21 connects a negative electrode terminal 6 of one single-battery 100 and a positive electrode terminal 7 of a neighboring single-battery 100. The five single-batteries 100 are thus connected in series via the four bus bars 21. That is, the battery module 200 shown in FIG. 8 is a battery module of five series-connection.

As shown in FIG. 8, the positive electrode terminal 7 of the single-battery 100 located at the left end of the five single-batteries 100 is connected to the positive electrode-side lead 22 for external connection. In addition, the negative electrode terminal 6 of the single-battery 100 located at the right end of the five single-batteries 100 is connected to the negative electrode-side lead 23 for external connection.

The battery module according to the third approach includes the secondary battery according to the second approach. Thus, the battery module according to the third approach can exhibit an excellent output performance.

(Fourth Approach)

According to a fourth approach, a battery pack is provided. The battery pack includes the battery module according to the third approach. The battery pack may include a single secondary battery according to the second approach instead of the battery module according to the third approach.

The battery pack according to the fourth approach may further include a protective circuit. The protective circuit has a function to control charging and discharging of the secondary battery. Alternatively, a circuit included in an equipment (for example, electronic devices, vehicles, and the like) where the battery pack serves as a power source may be used as the protective circuit for the battery pack.

Moreover, the battery pack may further include an external power distribution terminal. The external power distribution terminal is configured to externally output the current from the secondary battery, and/or to input external current to the secondary battery. In other words, when the battery pack is used as a power source, the current is externally provided via the external power distribution terminal. Also, when the battery pack is charged, the charging current (including a regenerative energy from motive force of vehicles such as automobiles) is provided to the battery pack via the external power distribution terminal.

Next, a battery pack as an example according to the fourth approach will be described with reference to the drawings.

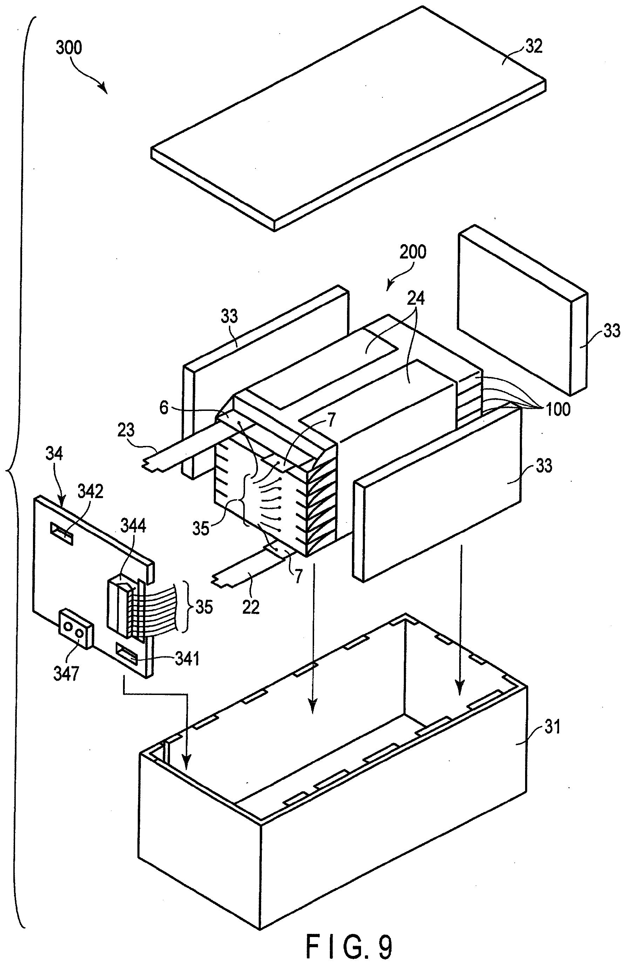

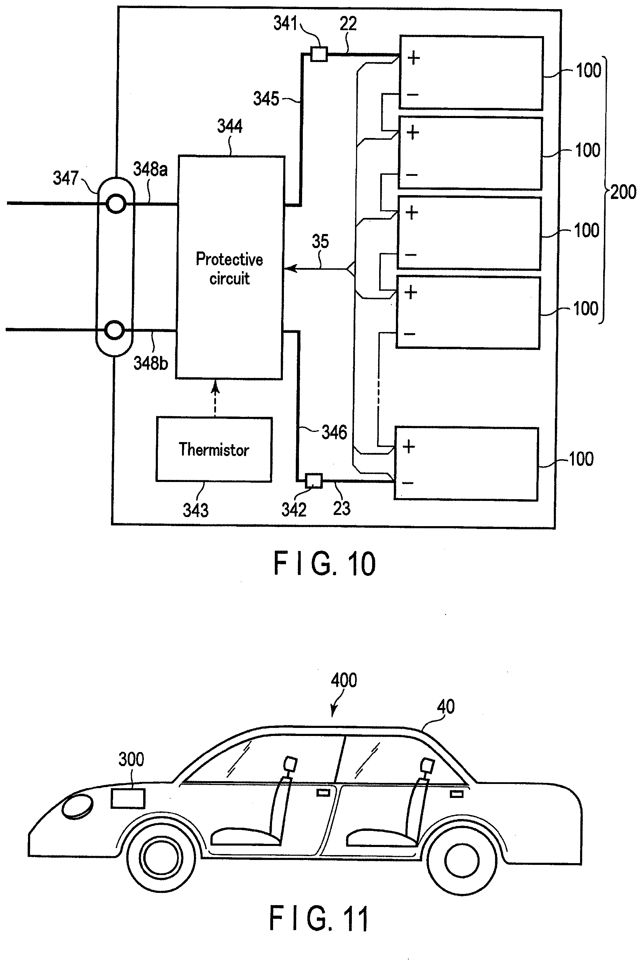

FIG. 9 is an exploded perspective view showing one example of a battery pack according to an approach. FIG. 10 is a block diagram showing an electric circuit of the battery pack in FIG. 9.

A battery pack 300 shown in FIGS. 9 and 10 includes a housing container 31, a lid 32, protective sheets 33, a battery module 200, a printed wiring board 34, a wiring 35, an insulating plate (not shown).

The housing container 31 is configured to be able to house the protective sheets 33, the battery module 200, the printed wiring board 34, and the wiring 35. The lid 32 is placed on the hosing container 31 to house the battery module 200 and the like. Each of the housing container 31 and the lid 32 is provided with an opening, a connection terminal or the like (not shown) which is to be connected to an external device or the like.

Protective sheets 33 are arranged on both internal surfaces in a long side direction of the housing container 31 and on one internal surface which faces the printed wiring board 34 via battery module 200 in a short side direction of the housing container 31. The protective sheets 33 are made of, for example, rubber or resin.

The battery module 200 includes single-batteries 100, a positive electrode-side lead 22, a negative electrode-side lead 23, and an adhesive tape 24. The battery module 200 may include one single-battery 100.

Each of the single-batteries 100 has the structure shown in FIG. 5. At least one of the single-batteries 100 is a secondary battery according to the second approach. The single-batteries 21 are stacked so that the negative electrode terminals 6 and the positive electrode terminals 7 extended outside are arranged in the same direction. The single-batteries 100 are electrically connected in series as shown in FIG. 10. The single-batteries 100 may be connected in parallel, or in a combination of series connection and parallel connection. If the plural single-batteries 100 are connected in parallel, the battery capacity increases as compared to a case in which they are connected in series.

The adhesive tape 24 fastens the single-batteries 100. In place of the adhesive tape 24, a heat-shrinkable tape may be used to fix the single-batteries 100. In this case, protective sheets are provided on the both sides of the battery module 200, a heat-shrinkable tape is revolved around the battery module, and the heat-shrinkable tape is thermally shrunk to bundle the single-batteries.

An end of the positive electrode-side lead 22 is connected to the positive electrode terminal 7 of the single-battery 100 located at the bottom layer of the stack of the single-batteries 100. An end of the negative electrode-side lead 23 is connected to the negative electrode terminal 6 of the single-battery 100 located at the top layer of the stack of the single-batteries 100.

A printed wiring board 34 is provided with a positive electrode-side connector 341, a negative electrode-side connector 342, a thermistor 343, a protective circuit 344, wires 345 and 346, an external power distribution terminal 347, a plus-side wire 348a and a minus-side wire 348b. One main surface of the printed wiring board 34 faces the side plane of the battery module 200 where the negative electrode terminals 6 and the positive electrode terminals 7 are extended. The insulating plate (not shown) is provided between the printed wiring board 34 and the battery module 200.

The positive electrode-side connector 341 is provided with a through hole. The other end of the positive electrode-side lead 22 is inserted into the through hole so as to electrically connect the positive electrode-side connector 341 to the positive electrode-side lead 22. The negative electrode-side connector 342 is provided with a through hole. The other end of the negative electrode-side lead 23 is inserted into the through hole so as to electrically connect the negative electrode-side connector 342 to the negative electrode-side lead 23.

The thermistor 343 is fixed on one main surface of the printing wiring board 34. The thermistor 343 detects the temperature of each single-battery 100 and transmits the detection signal to the protective circuit 344.

The external power distribution terminal 347 is fixed on the other main surface of the printed wiring board 34. The external power distribution terminal 347 is electrically connected to a device that exists outside the battery pack 300.

The protective circuit 344 is fixed on the other main surface of the printed wiring board 34. The protective circuit 344 is connected to the external power distribution terminal 347 via the positive-side wire 348a. The protective circuit 344 is connected to the external power distribution terminal 347 via the negative-side wire 348b. In addition, the protective circuit 344 is electrically connected to the positive electrode-side connector 341 via the wire 345. The protective circuit 344 is electrically connected to the negative electrode-side connector 342 via the wire 346. Furthermore, the protective circuit 344 is electrically connected to each of the single-batteries 100 via the wire 35.

The protective circuit 344 controls charge and discharge of the plural single-batteries 100. The protective circuit 344 is also configured to cut-off electric connection between the protective circuit 344 and the external power distribution terminal 347 to an external device, based on detection signals transmitted from the thermistor 343 or detection signals transmitted from each single-battery 100 or the battery module 200.

An example of the detection signal transmitted from the thermistor 343 is a signal representing that the temperature of the single-battery 100 is detected to be a predetermined temperature or more. An example of the detection signal transmitted from each single-battery 100 or the battery module 200 is a signal representing detection of over-charge, over-discharge, and overcurrent of the single-battery 100, and the like. If over-charge or the like is to be detected for each of the single-batteries 100, the battery voltage may be detected, or a positive electrode potential or negative electrode potential may be detected. In the latter case, a lithium electrode to be used as a reference pole is inserted into each single-battery 100.

Note that as the protective circuit 344, a circuit included in a device (for example, an electronic device or an automobile) that uses the battery pack 300 as a power supply may be used.

Such a battery pack 300 is used in, for example, an application where the battery pack 300 is required to have an excellent cycle performance when a large current is output. More specifically, the battery pack 300 is used as, for example, a power supply for an electronic device, a stationary battery, or an onboard battery for a vehicle or a rail-way vehicle. As the electronic device, for example, a digital camera can be used. The battery pack 300 is particularly preferably used as an onboard battery.

As described above, the battery pack 300 includes the external power distribution terminal 347. Hence, the battery pack 300 can output a current from the battery module 200 to an external device and input a current from the external device to the battery module 200 via the external power distribution terminal 347. In other words, when using the battery pack 300 as a power supply, the current from the battery module 200 is supplied to the external device via the external power distribution terminal 347. When charging the battery pack 300, a charge current from the external device is supplied to the battery pack 300 via the external power distribution terminal 347. If the battery pack 300 is used as an onboard battery, the regenerative energy of a motive force of the vehicle can be used as the charge current from the external device.

Note that the battery pack 300 may include battery modules 200. In this case, the battery modules 200 may be connected in series, in parallel, or in a combination of series connection and parallel connection. The printed wiring board 34 and the wire 35 may be omitted. In this case, the positive electrode-side lead 22 and the negative electrode-side lead 23 may be used as the external power distribution terminal.

The battery pack according to the fourth approach includes the secondary battery according to the second approach or the battery module according to the third approach. Hence, the battery pack according to the fourth approach can exhibit an excellent output performance.

(Fifth Approach)

According to a fifth approach, a vehicle is provided. The battery pack according to the fourth approach is installed on this vehicle.

In the vehicle according to the fifth approach, the battery pack is configured, for example, to recover a regenerative energy from a motive force of the vehicle.

Examples of the vehicle according to the fifth approach include two to four-wheeled hybrid electric automobiles, two to four-wheeled electric automobiles, electric assist bicycles, and rail-way cars.

In the vehicle according to the fifth approach, the installing position of the battery pack is not particularly limited. For example, in the case where the battery pack is installed in a automobile, the battery pack may be installed in the engine compartment of the vehicle, in rear parts of the vehicle, or under seats.

An example of the vehicle according to the fifth approach is explained below, with reference to the drawings.

FIG. 11 is a schematic sectional view showing one example of a vehicle according to the fifth approach.

A vehicle 400 shown in FIG. 11 includes a vehicle body 40 and a battery pack 300 according to the fourth approach.

The vehicle 400 shown in FIG. 11 is a four-wheeled automobile. As the vehicle 400, for example, two- to four-wheeled hybrid electric automobiles, two- to four-wheeled electric automobiles, electric assist bicycles, and rail-way cars may be used.

This vehicle 400 may have plural battery packs 300 installed. In such a case, the battery packs 300 may be connected in series, connected in parallel, or connected in a combination of in-series connection and in-parallel connection.

The battery pack 300 is installed in an engine compartment located at the front of the vehicle body 40. The location of installing the battery pack 300 is not particularly limited. The battery pack 300 may be installed in rear sections of the vehicle body 40, or under a seat. The battery pack 300 may be used as a power source of the vehicle 400. The battery pack 300 can also recover regenerative energy from motive force of the vehicle 400.

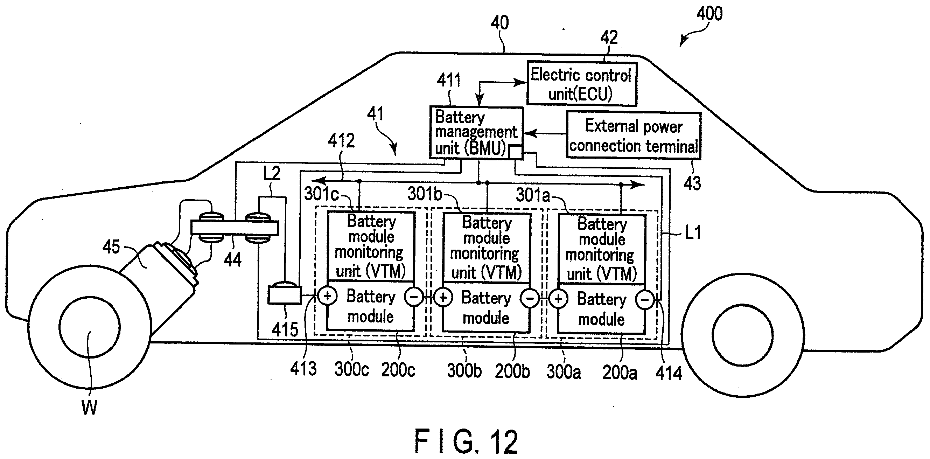

Next, with reference to FIG. 12, an aspect of the vehicle according to the fifth approach is explained.

FIG. 12 shows another example of a vehicle according to the fifth approach. A vehicle 400, shown in FIG. 12, is an electric automobile.

The vehicle 400, shown in FIG. 12, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 12, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The three battery packs 300a, 300b and 300c are electrically connected in series. The battery pack 300a includes a battery module 200a and a battery module monitoring unit (VTM: voltage temperature monitoring) 301a. The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c and collects information such as voltages or temperatures of the single-batteries 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 12) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near the switch elements.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 42, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted into the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver or the like, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the fifth approach includes the battery pack according to fourth approach. Hence, the vehicle according to the fifth approach can exhibit an excellent output performance.

[Examples]

Hereinafter, the above approach will be described in more detail based on examples.

(Example 1)

A nonaqueous electrolyte battery was manufactured by the following procedure.

(Production of Negative Electrode)

As a negative electrode active material, particles of a niobium-titanium composite oxide ($Nb_2TiO_7$; NTO) having an average particle size $D_A$ of 10 $\mu$m were provided. As a material of a negative electrode active material-containing layer, the negative electrode active material, an acetylene black powder and a graphite powder as conductive agents, a carboxymethyl cellulose ammonium salt (CMC) powder and styrene-butadiene rubber (SBR) were used. In addition, the blending ratio of these materials was NTO : acetylene black : graphite : CMC : SBR = 93 : 1.5 : 3.5 : 1 : 1 by mass ratio. Negative electrode materials were mixed in the following order. First, carboxymethylcellulose ammonium salt was dissolved in pure water, acetylene black was dispersed therein, then graphite was dispersed, then $Nb_2TiO_7$ was dispersed therein, and finally styrene/butadiene rubber was mixed. The slurry thus obtained was coated onto an aluminum foil, as a negative electrode current collector, having a thickness of 15 $\mu$m and an average crystal particle size of 30 $\mu$m. At this time, no slurry was coated onto the surface of a portion of the negative electrode current collector.

Subsequently, the coated film was dried. Finally, the dried coated film was pressed to obtain a negative electrode including a negative electrode positive electrode current collector and a negative electrode active material-containing layer formed on both surfaces of the negative electrode current collector. The negative electrode current collector included a negative electrode tab not supporting the negative electrode active material-containing layer. The density of the negative electrode active material-containing layer was 2.2 g/cm$^3$.

(Production of Positive Electrode)

A powder of lithium-nickel-cobalt-manganese composite oxide ($LiNi_{0.5}Co_{0.2}Mn_{0.3}O_2$: NCM 523) having an average particle size $D_C$ of 15 $\mu$m was provided as positive electrode active material particles. As a material of a positive electrode layer, this positive electrode active material, a graphite powder as a conductive agent and having an average particle size of 6 $\mu$m, and polyvinylidene fluoride (PVdF) as a binder were used.

The above provided materials were mixed in the following order with NCM 523 : graphite : PVdF = 100 : 5 : 3 by mass ratio. First, PVdF was dissolved in N-methyl-2-pyrrolidone, and graphite was added thereto and dispersed therein to obtain a dispersion. Then, a powder of NCM 523 was mixed and dispersed in this dispersion, and a mixed solution was obtained. Then, N-methyl-2-pyrrolidone was further added to adjust the solid content concentration of the mixed solution to 60% and thus to obtain a slurry of a positive electrode material.

The slurry thus obtained was coated onto both surfaces of an aluminum foil, as a positive electrode current collector, having a thickness of 15 $\mu$m and an average crystal particle size of 30 $\mu$m. At this time, no slurry was coated onto the surface of a portion of the positive electrode current collector.

Subsequently, the coated film was dried. Finally, the dried coated film was pressed to obtain a positive electrode including a positive electrode current collector and a positive electrode active material-containing layer formed on both surfaces of the positive electrode current collector. The positive electrode current collector included a positive electrode tab not supporting the positive electrode active material-containing layer. The density of the positive electrode active material-containing layer was 3.0 g/cm$^3$.

(Production of Electrode Group)

Using the positive electrode and the negative electrode produced as described above, the electrode group of Example 1 was produced according to the manufacturing method of the first example described above.

As materials of a first coating material, a powder of $Li_7La_3Zr_2O_{12}$ (LLZ) having an average particle size $D_1$ of 1 $\mu$m, carboxymethyl cellulose sodium salt (CMC), and styrene-butadiene rubber (SBR) were used. The blending ratio of these materials was 100 : 1.0 : 1.0 by mass ratio. The electrolyte layer materials were mixed in the following order. First, CMC was dissolved in pure water, then LLZ was dispersed therein, and finally styrene-butadiene rubber (SBR) was mixed.

As materials of a second coating material, a powder of $Li_7La_3Zr_2O_{12}$ (LLZ) having an average particle size $D_2$ of 1 $\mu$m, carboxymethyl cellulose sodium salt (CMC) and styrene-butadiene rubber (SBR) were used. The blending ratio of these materials was 100 : 1.0 : 1.0 by mass ratio. The electrolyte layer materials were mixed in the following order. First, CMC was dissolved in pure water, then LLZ was dispersed therein, and finally styrene-butadiene rubber (SBR) was mixed.

As materials of a third coating material, a powder of $Li_7La_3Zr_2O_{12}$ (LLZ) having an average particle size $D_3$ of 7 $\mu$m, carboxymethyl cellulose sodium salt (CMC), and styrene-butadiene rubber (SBR) were used. The blending ratio of these materials was 100 : 0.5 : 0.5 by mass ratio. The electrolyte layer materials were mixed in the following order. First, CMC was dissolved in pure water, then LLZ was dispersed therein, and finally styrene-butadiene rubber (SBR) was mixed.

The coating of each coating material was adjusted such that the thickness and the density of each portion of the solid electrolyte layer were the values shown in the following Table 1.

(Examples 2 to 9 and Comparative Examples 1 to 4)

In Examples 2 to 9 and Comparative Examples 1 to 4, each electrode group was produced according to the same procedure as Example 1 except that the average particle size $D_A$ of particles of NTO, the average particle size $D_C$ of particles of NCM 523, and the average particle size of LLZ included in the first to third coating materials were changed as shown in the following Tables 1 and 2, and that the blending ratio of the coating materials and the coating procedure were adjusted such that the thickness and the density of each portion of the solid electrolyte layer were the values shown in the following Table 1.

(Manufacturing of Battery)

Each electrode group was accommodated in a laminate cup. Then, a peripheral edge of the laminate cup was thermally bonded while leaving a portion thereof unbonded such that a portion of the positive electrode tab as a positive electrode external terminal and a portion of the negative electrode tab as a negative electrode external terminal were located outside the laminate cup.

Then, the laminate cup was then dried overnight at 100°C in this state.

On the other hand, a nonaqueous electrolyte was prepared according to the following procedure. First, ethylene carbonate and diethyl carbonate were mixed at a volume ratio of 1 : 2 in a glove box to prepare a mixed solvent. Lithium hexafluorophosphate ($LiPF_6$) was dissolved at a concentration of 1 mol/L in the mixed solvent to prepare a nonaqueous electrolyte solution.

25 mL of the electrolytic solution was poured into the laminate cup dried overnight, and the electrode group was impregnated with the electrolyte solution. Thereafter, the portion of the peripheral edge of the laminate cup, which was not thermally bonded, was thermally bonded to seal the electrode group (and the nonaqueous electrolyte solution) in the laminate cup.

Thus, batteries of Examples and Comparative Examples were manufactured.

[Table 1]

| | Species | First Portion | | | Second Portion | | | Third Portion | | |
|---|---|---|---|---|---|---|---|---|---|---|
| | | $D_1$ (μm) | $T_1$ (μm) | Density (g/cm$^3$) | $D_2$ (μm) | $T_2$ (μm) | Density (glcm$^3$) | $D_3$ (μm) | $T_3$ (μm) | Density (g/cm$^3$) |
| Example 1 | LLZ | 1 | 4 | 3.3 | 1 | 5 | 3.3 | 7 | 10 | 3.8 |
| Example 2 | LLZ | 1 | 4 | 3.3 | 1 | 5 | 3.3 | 5 | 10 | 3.7 |
| Example 3 | LLZ | 1 | 4 | 3.3 | 1 | 5 | 3.3 | 3 | 10 | 3.6 |
| Example 4 | LLZ | 1 | 4 | 3.3 | 1 | 5 | 3.3 | 7 | 10 | 3.8 |
| Example 5 | LLZ | 1 | 4 | 3.3 | 1 | 5 | 3.3 | 5 | 10 | 3.7 |
| Example 6 | LLZ | 1 | 4 | 3.3 | 1 | 5 | 3.3 | 3 | 10 | 3.6 |
| Example 7 | LLZ | 1 | 4 | 3.3 | 1 | 5 | 3.3 | 7 | 10 | 3.8 |
| Example 8 | LLZ | 1 | 4 | 3.3 | 1 | 5 | 3.3 | 5 | 10 | 3.7 |
| Example 9 | LLZ | 1 | 4 | 3.3 | 1 | 5 | 3.3 | 3 | 10 | 3.6 |
| Comparative Example 1 | LLZ | 4 | 13 | 3.9 | 4 | 14 | 3.9 | 3 | 10 | 3.6 |
| Comparative Example 2 | LLZ | 7 | 13 | 3.9 | 4 | 14 | 3.9 | 3 | 10 | 3.6 |
| Comparative Example 3 | LLZ | 4 | 13 | 3.9 | 7 | 14 | 3.9 | 3 | 10 | 3.6 |
| Comparative Example 4 | LLZ | 7 | 13 | 3.9 | 7 | 14 | 3.9 | 3 | 10 | 3.6 |

[Table 2]

| | Positive Electrode Active Material | | Negative Electrode Active Material | |
|---|---|---|---|---|
| | Species | $D_C$ (μm) | Species | $D_A$ (μm) |
| Example 1 | NCM523 | 15 | NTO | 10 |
| Example 2 | NCM523 | 15 | NTO | 10 |
| Example 3 | NCM523 | 15 | NTO | 10 |
| Example 4 | NCM523 | 6 | NTO | 5 |
| Example 5 | NCM523 | 6 | NTO | 5 |
| Example 6 | NCM523 | 6 | NTO | 5 |
| Example 7 | NCM523 | 3 | NTO | 2 |
| Example 8 | NCM523 | 3 | NTO | 2 |
| Example 9 | NCM523 | 3 | NTO | 2 |
| Comparative Example 1 | NCM523 | 6 | NTO | 5 |
| Comparative Example 2 | NCM523 | 6 | NTO | 5 |
| Comparative Example 3 | NCM523 | 6 | NTO | 5 |
| Comparative Example 4 | NCM523 | 6 | NTO | 5 |

[Evaluation]

The battery performance of each of the nonaqueous electrolyte batteries of Examples 1 to 9 and Comparative Examples 1 to 4 was evaluated according to the following procedure. In the following charging at a constant current, charging was performed until the battery voltage reached 3.3 V. In the following discharging at a constant current, discharging was performed until the battery voltage reached 1.0 V.

<Output Performance>

Each of the manufactured batteries was placed in a thermostatic chamber at 25°C and subjected to charging at a constant current of 1.0 C. Subsequently, the battery was subjected to discharging at a constant current of 0.2 C. Subsequently, the battery was subjected to charging at a constant current of 1.0 C in the same thermostatic chamber. Subsequently, the battery was subjected to discharging at a constant current of 5.0 C. The ratio of the discharge capacity at 5.0 C to the discharge capacity at 0.2 C was taken as the rate capacity retention ratio of each battery.

<Cycle Performance>

Each of the manufactured batteries was placed in a thermostatic chamber at 45°C and subjected to 50 cycles of charge-and-discharge cycles each of which has one charging at a constant current of 1.0 C and one discharging at a constant current of 1.0 C in one cycle. Thereafter, each of the batteries was placed in a thermostatic chamber at 25°C and subjected to charging and discharging at a constant current density of 1.0 C in both charging and discharging. The percentage obtained here of the discharge capacity relative to the discharge capacity at the first cycle was taken as the capacity retention ratio after cycles.

[Results]

Results of the output performance and the cycle performance are shown in the following Table 3. In addition, the relationships of the average particle size and the relationships of the thickness in the solid electrolyte layer are also shown in the following Table 3.

[Table 3]

| | Relationships of Average Particle Size. | | | | Relationships of Thickness | | Evaluation | |
|---|---|---|---|---|---|---|---|---|
| | $D_1/D_3$ | $D_2/D_3$ | $D_1/D_C$ | $D_2/D_A$ | $T_1/T_3$ | $T_2/T_3$ | Rate Capacity Retention Ratio | Capacity Retention Ratio after cycles |
| Example 1 | 0.143 | 0.143 | 0.067 | 0.100 | 0.400 | 0.500 | 81% | 91% |
| Example 2 | 0.200 | 0.200 | 0.067 | 0.100 | 0.400 | 0.500 | 76% | 89% |
| Example 3 | 0.333 | 0.333 | 0.067 | 0.100 | 0.400 | 0.500 | 70% | 88% |
| Example 4 | 0.143 | 0.143 | 0.167 | 0.200 | 0.400 | 0.500 | 85% | 94% |
| Example 5 | 0.200 | 0.200 | 0.167 | 0.200 | 0.400 | 0.500 | 81% | 92% |
| Example 6 | 0.333 | 0.333 | 0.167 | 0.200 | 0.400 | 0.500 | 78% | 89% |
| Example 7 | 0.143 | 0.143 | 0.333 | 0.500 | 0.400 | 0.500 | 92% | 89% |
| Example 8 | 0.200 | 0.200 | 0.333 | 0.500 | 0.400 | 0.500 | 88% | 87% |
| Example 9 | 0.333 | 0.333 | 0.333 | 0.500 | 0.400 | 0.500 | 85% | 86% |
| Comparative Example 1 | 1.333 | 1.333 | 0.667 | 0.800 | 1.300 | 1.400 | 51% | 56% |
| Comparative Example 2 | 2.333 | 1.333 | 1.167 | 0.800 | 1.300 | 1.400 | 35% | 36% |
| Comparative Example 3 | 1.333 | 2.333 | 0.667 | 1.400 | 1.300 | 1.400 | 44% | 47% |
| Comparative Example 4 | 2.333 | 2.333 | 1.167 | 1.400 | 1.300 | 1.400 | 30% | 34% |

As is apparent from the results shown in Table 3, the nonaqueous electrolyte batteries of Examples 1 to 9 were able to exhibit a more excellent output performance than the nonaqueous electrolyte batteries of Comparative Examples 1 to 4. Further, the nonaqueous electrolyte batteries of Examples 1 to 9 were able to exhibit a more excellent cycle performance than that of each of the nonaqueous electrolyte batteries of Comparative Examples 1 to 4. It is considered that in the nonaqueous electrolyte batteries of Examples 1 to 9, since the delivery of Li between the positive electrode and the solid electrolyte layer, the conduction of Li in the solid electrolyte layer, and the delivery of Li between the negative electrode and the solid electrolyte layer were able to be promoted, load applied to each member could be reduced even by repeating charge-and-discharge cycles. This is considered to be one of the reasons why the nonaqueous electrolyte batteries of Examples 1 to 9 were able to exhibit an excellent life performance.

(Examples 10 to 16)

In Examples 10 to 16, each electrode group was produced according to the same procedures as Example 1 except that each of the solid electrolyte particles included in the first to third coating materials was changed as shown in the following Table 4, and that the blending ratio of the coating materials and the coating procedure were adjusted such that the thickness and the density of each portion of the solid electrolyte layer were the values shown in the following Table 4.

[Table 4]

| | First Portion | | | | Second Portion | | | | Third Portion | | | |
|---|---|---|---|---|---|---|---|---|---|---|---|---|
| | Species | $D_1$ ($\mu$m) | $T_1$ ($\mu$m) | Density (g/cm$^3$) | Species | D2 ($\mu$m) | $T_2$ ($\mu$m) | Density (g/cm$^3$) | Species | $D_3$ ($\mu$m) | $T_3$ ($\mu$m) | Density (g/cm$^3$) |
| Example 10 | LZCP | 1 | 4 | 3.7 | LZCP | 1 | 5 | 3.7 | LZCP | 5 | 10 | 3.4 |
| Example 11 | LAGP | 1 | 4 | 3.7 | LAGP | 1 | 5 | 3.7 | LAGP | 5 | 10 | 3.3 |
| Example 12 | LATP | 1 | 4 | 3.7 | LATP | 1 | 5 | 3.7 | LATP | 5 | 10 | 3.4 |
| Example 13 | LiPON | 1 | 4 | 3.7 | UPON | 1 | 5 | 3.7 | UPON | 6 | 11 | 3.5 |
| Example 14 | LLTO | 1 | 4 | 3.7 | LLTO | 1 | 5 | 3.7 | LLTO | 4 | 9 | 3.7 |
| Example 15 | LPS | 1 | 4 | 3.7 | LPS | 1 | 5 | 3.7 | LPS | 8 | 12 | 3.6 |
| Example 16 | LGPS | 1 | 4 | 3.7 | LGPS | 1 | 5 | 3.7 | LGPS | 8 | 12 | 3.7 |
| LZCP:LiZrCa($PO_4$); LAGP:LiAlGe($PO_4$); LATP:LiAlTi($PO_4$); <br> LiPON:$Li_{2.9}PO_{3.3}N_{0.46}$; . LLTO:$La_{0.57}Li_{0.29}TiO_3$; <br> LPS: Mixture of $Li_2S$ and $P_2S_5$ at mass ratio of 75 : 25 <br> LGPS:$Li_{10}GeP_2S_{12}$ | | | | | | | | | | | | |

(Examples 17 to 25)

In Examples 17 to 23, each electrode group was produced according to the same procedures as Example 1 except that the positive electrode active material particles were changed as shown in the following Table 5. In Examples 24 and 25, each electrode group was produced according to the same procedures as Example 1 except that the negative electrode active material particles were changed as shown in the following Table 5.

[Table 5]

| | Positive Electrode Active Material | | Negative Electrode Active Material | |
|---|---|---|---|---|
| | Species | $D_C$ (μm) | Species | $D_A$ (μm) |
| Example 17 | NCM111 | 6 | NTO | 10 |
| Example 18 | NCM622 | 10 | NTO | 10 |
| Example 19 | NCM811 | 12 | NTO | 10 |
| Example 20 | NCA | 10 | NTO | 10 |
| Example 21 | $LiMn_2O_4$ | 5 | NTO | 10 |
| Example 22 | $LiCoO_2$ | 5 | NTO | 10 |
| Example 23 | $LiFePO_4$ | 3 | NTO | 10 |
| Example 24 | NCM523 | 6 | LTO | 2 |
| Example 25 | NCM523 | 6 | Graphite | 20 |
| NCM111: $LiNi_{0.33}Co_{0.33}Mn_{0.33}O_2$;<br>NCM622: $LiNi_{0.6}Co_{0.2}Mn_{0.2}O_2$;<br>NCM811: $LiNi_{0.8}Co_{0.1}Mn_{0.1}O_2$;<br>NCA: $LiNi_{0.8}Co_{0.15}Al_{0.05}O_2$;<br>NCM523: $LiNi_{0.5}Co_{0.2}Mn_{0.3}O_2$;<br>NTO: $Nb_2TiO_7$;<br>LTO: $Li_4Ti_5O_{12}$ | | | | |

(Manufacturing of Battery and Evaluation)

A battery of each example was manufactured according to the same procedures as Example 1 except that each of the electrode groups of Examples 10 to 25 was used. The battery performance of each manufactured battery was evaluated according to the same procedures as Example 1. Results thereof are shown in the following Table 6. In addition, the relationships of the average particle size and the relationships of the thickness in the solid electrolyte layer are also shown in the following Table 6.

[Table 6]

| | Relationships of Average Particle Size | | | | Relationships of Thickness | | Evaluation | |
|---|---|---|---|---|---|---|---|---|
| | $D_1/D_3$ | $D_2/D_3$ | $D_1/D_C$ | $D_2/D_A$ | $T_1/T_3$ | $T_2/T_3$ | Rate Capacity Retention Ratio | Capacity Retention Ratio after cycles |
| Example 10 | 0.200 | 0.200 | 0.067 | 0.100 | 0.400 | 0.500 | 81% | 91% |
| Example 11 | 0.200 | 0.200 | 0.067 | 0.100 | 0.400 | 0.500 | 85% | 91% |
| Example 12 | 0.200 | 0.200 | 0.067 | 0.100 | 0.400 | 0.500 | 90% | 92% |

(continued)

| | | Relationships of Average Particle Size | | | | Relationships of Thickness | | Evaluation | |
|---|---|---|---|---|---|---|---|---|---|
| | | $D_1/D_3$ | $D_2/D_3$ | $D_1/D_C$ | $D_2/D_A$ | $T_1/T_3$ | $T_2/T_3$ | Rate Capacity Retention Ratio | Capacity Retention Ratio after cycles |
| Example 13 | | 0.167 | 0.167 | 0.067 | 0.100 | 0.364 | 0.455 | 78% | 90% |
| Example 14 | | 0.250 | 0.250 | 0.067 | 0.100 | 0.444 | 0.556 | 77% | 88% |
| Example 15 | | 0.125 | 0.125 | 0.067 | 0.100 | 0.333 | 0.417 | 81% | 78% |
| Example 16 | | 0.125 | 0.125 | 0.067 | 0.100 | 0.333 | 0.417 | 82% | 83% |
| Example 17 | | 0.143 | 0.143 | 0.167 | 0.100 | 0.400 | 0.500 | 88% | 90% |
| Example 18 | | 0.143 | 0.143 | 0.100 | 0.100 | 0.400 | 0.500 | 85% | 86% |
| Example 19 | | 0.143 | 0.143 | 0.083 | 0.100 | 0.400 | 0.500 | 75% | 82% |
| Example 20 | | 0.143 | 0.143 | 0.100 | 0.100 | 0.400 | 0.500 | 74% | 83% |
| Example 21 | | 0.143 | 0.143 | 0.200 | 0.100 | 0.400 | 0.500 | 89% | 89% |
| Example 22 | | 0.143 | 0.143 | 0.200 | 0.100 | 0.400 | 0.500 | 88% | 91% |
| Example 23 | | 0.143 | 0.143 | 0.333 | 0.100 | 0.400 | 0.500 | 86% | 93% |
| Example 24 | | 0.143 | 0.143 | 0.167 | 0.500 | 0.400 | 0.500 | 95% | 96% |
| Example 25 | | 0.143 | 0.143 | 0.167 | 0.050 | 0.400 | 0.500 | 72% | 78% |

(Examples 26 to 28)

In Examples 26 and 27, each electrode group was produced according to the same procedures as Example 1 except that each of the solid electrolyte particles included in the first to third coating materials was changed as shown in the following Table 7, and that the blending ratio of the coating materials and the coating procedure were adjusted such that the thickness and the density of each portion of the solid electrolyte layer were the values shown in the following Table 7. In Example 28, an electrode group was produced according to the same procedures as Example 1 except that each of the solid electrolyte particles included in the first to third coating materials was changed as shown in the following Table 7, that the blending ratio of the coating materials and the coating procedure were adjusted such that the thickness and the density of each portion of the solid electrolyte layer were the values shown in the following Table 7, and that the negative electrode active material particles were changed as shown in the following Table 8.

[Table 7]

| | First Portion | | | | Second Portion | | | | Third Portion | | | |
|---|---|---|---|---|---|---|---|---|---|---|---|---|
| | Species | $D_1$ (μm) | $T_1$ (μm) | Density (g/cm$^3$) | Species | $D_2$ (μm) | $T_2$ (μm) | Density (g/cm$^3$) | Species | $D_3$ (μm) | $T_3$ (μm) | Density (g/cm$^3$) |
| Example 26 | LATP | 1 | 4 | 3.7 | LZCP | 1 | 5 | 3.7 | LATP | 5 | 10 | 3.4 |
| Example 27 | LATP | 1 | 4 | 3.7 | LATP | 2 | 5 | 3.7 | LATP | 6 | 10 | 3.3 |
| Example 28 | LATP | 1 | 4 | 3.7 | LATP | 1 | 5 | 3.7 | LATP | 7 | 10 | 3.7 |
| LATP:LiAlTi(PO$_4$); LZCP:LiZrCa(PO$_4$) | | | | | | | | | | | | |

[Table 8]

| | Positive Electrode Active Material | | Negative Electrode Active Material | |
|---|---|---|---|---|
| | Species | $D_C$ (μm) | Species | $D_A$ (μm) |
| Example 26 | NCM523 | 15 | NTO | 10 |
| Example 27 | NCM523 | 15 | NTO | 10 |
| Example 28 | NCM523 | 15 | SiO | 15 |

(Manufacturing of Battery and Evaluation)

A battery of each example was manufactured according to the same procedures as Example 1 except that the electrode groups of Examples 26 to 28 were used. The battery performance of each manufactured battery was evaluated according to the same procedures as Example 1. Results thereof are shown in the following Table 9. In addition, the relationships of the average particle size and the relationships of the thickness in the solid electrolyte layer are also shown in the following Table 9.

[Table 9]

| | Relationships of Average Particle Size | | | | Relationships of Thickness | | Evaluation | |
|---|---|---|---|---|---|---|---|---|
| | $D_1/D_3$ | $D_2/D_3$ | $D_1/D_C$ | $D_2/D_A$ | $T_1/T_3$ | $T_1/T_3$ | Rate Capacity Retention Ratio | Capacity Retention Ratio after cycles |
| Example 26 | 0.200 | 0.200 | 0.067 | 0.100 | 0.400 | 0.500 | 80% | 90% |
| Example 27 | 0.167 | 0.333 | 0.067 | 0.200 | 0.400 | 0.500 | 84% | 89% |
| Example 28 | 0.143 | 0.143 | 0.067 | 0.067 | 0.400 | 0.500 | 78% | 71% |

As is apparent from the results shown in Table 3, Table 6, and Table 9, the batteries of Examples 10 to 28, as well as the batteries of Examples 1 to 9, were able to exhibit a more excellent output performance than those of the nonaqueous electrolyte batteries of Comparative Examples 1 to 4. Further, the batteries of Examples 10 to 28, as well as the batteries of Examples 1 to 9, were able to exhibit a more excellent cycle performance than those of the nonaqueous electrolyte batteries of Comparative Examples 1 to 4. These results show that the batteries of Examples 10 to 28, in which at least one of the kind of solid electrolyte particles, the kind of the negative electrode active material, and the kind of the positive electrode active material is changed from Example 1, were able to exhibit an excellent output performance and an excellent cycle performance like the battery of Example 1. Furthermore, the comparison between Example 1 and Example 26 shows that the battery of Example 26, in which the materials of the first to third solid electrolyte particles are not made of the same material, was also able to exhibit an excellent output performance and an excellent cycle performance like the battery of Example 1. Moreover, the comparison between Example 1 and Example 27 shows that the battery of Example 27, in which the average particle size of the first solid electrolyte particles is different from the average particle size of the second solid electrolyte particles, was also able to exhibit an excellent output performance and an excellent cycle performance like the battery of Example 1.

According to at least one approach and Example described above, an electrode group is provided. The electrode group includes a positive electrode, a negative electrode, and a solid electrolyte layer. The solid electrolyte layer is provided between the positive electrode and the negative electrode. The solid electrolyte layer includes a first portion including first solid electrolyte particles in contact with the positive electrode, a second portion including second solid electrolyte particles in contact with the negative electrode, and a third portion provided between the first and second portions and including third solid electrolyte particles. The average particle size of the third solid electrolyte particles is larger than the average particle size of the first solid electrolyte particles, and larger than the average particle size of

32

the second solid electrolyte particles. Thus, in the electrode group, the number of contacts between the positive electrode and the solid electrolyte and the number of contacts between the negative electrode and the solid electrolyte are increased, so that it is possible to promote the delivery of lithium ions between the solid electrolyte layer and each of the positive electrode and the negative electrode. On the other hand, since the average particle size of the third solid electrolyte particles in the third portion which is the intermediate portion is large, the interface between the particles in this portion can be reduced. As the results, the electrode group can realize a secondary battery capable of exhibiting an excellent output performance.

The present disclosure also encompasses the following approaches of electrode groups, batteries, battery packs and vehicles:

1. An electrode group comprising:

a positive electrode;
a negative electrode; and
a solid electrolyte layer provided between the positive electrode and the negative electrode,
wherein the solid electrolyte layer comprises a first portion comprising first solid electrolyte particles in contact with the positive electrode, a second portion comprising second solid electrolyte particles in contact with the negative electrode, and a third portion provided between the first and second portions and comprising third solid electrolyte particles, and
an average particle size of the third solid electrolyte particles is larger than an average particle size of the first solid electrolyte particles, and larger than an average particle size of the second solid electrolyte particles.

2. The electrode group according to clause 1, wherein the solid electrolyte layer satisfies

$$0.0016 \leq D_1/D_3 \leq 0.96;$$

and

$$0.0033 \leq D_2/D_3 \leq 0.96,$$

wherein $D_1$ is the average particle size of the first solid electrolyte particles, $D_2$ is the average particle size of the second solid electrolyte particles, and $D_3$ is the average particle size of the third solid electrolyte particles.

3. The electrode group according to clause 1 or 2, wherein the positive electrode comprises positive electrode active material particles, and an average particle size of the positive electrode active material particles is larger than the average particle size of the first solid electrolyte particles, and the negative electrode comprises negative electrode active material particles, and an average particle size of the negative electrode active material particles is larger than the average particle size of the second solid electrolyte particles.

4. The electrode group according to any one of clauses 1 to 3, wherein the solid electrolyte layer satisfies

$$0.002 \leq T_1/T_3 \leq 0.99;$$

and

$$0.004 \leq T_2/T_3 \leq 0.7,$$

wherein $T_1$ is a thickness of the first portion, $T_2$ is a thickness of the second portion, and $T_3$ is a thickness of the third portion.

5. The electrode group according to clause 3, wherein the negative electrode active material particles comprise at least one kind of particles selected from the group consisting of particles of a lithium titanate having a spinel-type crystal structure, particles of a lithium titanate having a ramsdellite-type crystal structure, particles of a titanium oxide having an anatase-type crystal structure, particles of a titanium oxide having a monoclinic crystal structure, particles of a niobium-titanium composite oxide having a monoclinic crystal structure, and particles of a niobium-containing composite oxide having an orthorhombic crystal structure.

6. A secondary battery comprising the electrode group according to any one of clauses 1 to 5.

7. The secondary battery according to clause 6, further comprising a liquid nonaqueous electrolyte and/or a gel nonaqueous electrolyte contained in the electrode group.

8. A battery pack comprising the secondary battery according to clause 6 or 7.

9. The battery pack according to clause 8, further comprising:

an external power distribution terminal; and
a protective circuit.

10. The battery pack according to clause 8 or 9, comprising a plural of secondary batteries, the plural of the secondary batteries being electrically connected in series, in parallel, or in combination of in series and in parallel.

11. A vehicle comprising the battery pack according to any one of clauses 8 to 10.

12. The vehicle according to clause 11, which comprises a mechanism configured to convert kinetic energy of the vehicle into regenerative energy.

While certain approaches have been described, these approaches have been presented by way of example only, and are not intended to limit the scope of the claims. Indeed, the electrode group described herein may be embodied in a variety of other forms; furthermore various omissions, substitutions and changes in the form of the apparatuses described herein may be made.

**Claims**

1. An electrode group (1) comprising:

a positive electrode (5);
a negative electrode (3); and
a solid electrolyte layer (4) provided between the positive electrode (5) and the negative electrode (3), wherein the solid electrolyte layer (4) comprises a first portion (4-1) comprising first solid electrolyte particles (4A-1) in contact with the positive electrode (5), a second portion (4-2) comprising second solid electrolyte particles (4A-2) in contact with the negative electrode (3), and a third portion (4-3) provided between the first and second portions (4-1, 4-2) and comprising third solid electrolyte particles (4A-3), and an average particle size of the third solid electrolyte particles (4A-3) is larger than an average particle size of the first solid electrolyte particles (4A-1), and larger than an average particle size of the second solid electrolyte particles (4A-2).

2. The electrode group (1) according to claim 1, wherein the solid electrolyte layer (4) satisfies

$$0.0016 \leq D_1/D_3 \leq 0.96;$$

and

$$0.0033 \leq D_2/D_3 \leq 0.96,$$

wherein $D_1$ is the average particle size of the first solid electrolyte particles (4A-1), $D_2$ is the average particle size of the second solid electrolyte particles (4A-2), and $D_3$ is the average particle size of the third solid electrolyte particles (4A-3).

3. The electrode group (1) according to claim 1 or 2, wherein the positive electrode (5) comprises positive electrode active material particles (5A), and an average particle size of the positive electrode active material particles (5A) is larger than the average particle size of the first solid electrolyte particles (4A-1), and the negative electrode (3) comprises negative electrode active material particles (3A), and an average particle size of the negative electrode active material particles (3A) is larger than the average particle size of the second solid electrolyte particles (4A-2).

4. The electrode group (1) according to any one of claims 1 to 3, wherein the solid electrolyte layer (4) satisfies

$$0.002 \leq T_1/T_3 \leq 0.99;$$

and

$$0.004 \leq T_2/T_3 \leq 0.7,$$

wherein $T_1$ is a thickness of the first portion (4-1), $T_2$ is a thickness of the second portion (4-2), and $T_3$ is a thickness of the third portion (4-3).

5. The electrode group (1) according to claim 3, wherein the negative electrode active material particles (3A) comprise at least one kind of particles selected from the group consisting of particles of a lithium titanate having a spinel-type crystal structure, particles of a lithium titanate having a ramsdellite-type crystal structure, particles of a titanium oxide having an anatase-type crystal structure, particles of a titanium oxide having a monoclinic crystal structure, particles of a niobium-titanium composite oxide having a monoclinic crystal structure, and particles of a niobium-containing composite oxide having an orthorhombic crystal structure.

6. A secondary battery (100) comprising the electrode group (1) according to any one of claims 1 to 5.

7. The secondary battery (100) according to claim 6, further comprising a liquid nonaqueous electrolyte and/or a gel nonaqueous electrolyte contained in the electrode group.

8. A battery pack (300, 300a, 300b, 300c) comprising the secondary battery (100) according to claim 6 or 7.

9. The battery pack (300, 300a, 300b, 300c) according to claim 8, further comprising:

   an external power distribution terminal (347); and
   a protective circuit (344).

10. The battery pack (300, 300a, 300b, 300c) according to claim 8 or 9, comprising a plural of secondary batteries (100), the plural of the secondary batteries (100) being electrically connected in series, in parallel, or in combination of in series and in parallel.

11. A vehicle (400) comprising the battery pack (300, 300a, 300b, 300c) according to any one of claims 8 to 10.

12. The vehicle (400) according to claim 11, which comprises a mechanism configured to convert kinetic energy of the vehicle (400) into regenerative energy.

F I G. 1

F I G. 2

EP 3 379 621 A1

FIG. 3

FIG. 4

F I G. 5

F I G. 6

FIG. 7

FIG. 8

F I G. 9

FIG. 10

FIG. 11

F I G. 12

Europäisches
Patentamt

European
Patent Office

Office européen
des brevets

# EUROPEAN SEARCH REPORT

Application Number

EP 17 19 0552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/197182 A1 (KATOH TAKASHI [JP]) 6 August 2009 (2009-08-06) | 1,2,4,6 | INV. H01M4/485 |
| Y | * abstract; figure 2 * * paragraphs [0015], [0026], [0049], [0052] * | 3,5,7-12 | H01M10/0525 H01M10/056 H01M10/0562 |
| Y | US 2011/045355 A1 (ICHIKAWA SUKENORI [JP]) 24 February 2011 (2011-02-24) * abstract; figure 5 * * paragraphs [0024], [0025], [0036], [0037], [0053] * | 3,5,7-12 | |
| Y | US 2017/077547 A1 (TAKAMI NORIO [JP] ET AL) 16 March 2017 (2017-03-16) * paragraphs [0014], [0049], [0103], [0104], [0109] - [0111] * | 8-12 | |

TECHNICAL FIELDS
SEARCHED       (IPC)

H01M

The present search report has been drawn up for all claims

| Place of search | Date of completion of the search | Examiner |
|---|---|---|
| Munich | 12 October 2017 | Gregori, Giuliano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 19 0552

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2017

| Patent document cited in search report | | Publication date | Patent family member(s) | | Publication date |
|---|---|---|---|---|---|
| US 2009197182 | A1 | 06-08-2009 | EP | 2086038 A1 | 05-08-2009 |
| | | | JP | 5288816 B2 | 11-09-2013 |
| | | | JP | 2009181921 A | 13-08-2009 |
| | | | US | 2009197182 A1 | 06-08-2009 |
| US 2011045355 | A1 | 24-02-2011 | CN | 101997111 A | 30-03-2011 |
| | | | CN | 104362288 A | 18-02-2015 |
| | | | JP | 2011065982 A | 31-03-2011 |
| | | | US | 2011045355 A1 | 24-02-2011 |
| | | | US | 2015188124 A1 | 02-07-2015 |
| US 2017077547 | A1 | 16-03-2017 | CN | 107069086 A | 18-08-2017 |
| | | | EP | 3145018 A1 | 22-03-2017 |
| | | | JP | 2017059536 A | 23-03-2017 |
| | | | US | 2017077547 A1 | 16-03-2017 |

EPO FORM P0459

For more details about this annex : see Official Journal of the European Patent Office, No. 12/82